# EUROPEAN PATENT APPLICATION

(11) **EP 4 531 487 A1**
(43) Date of publication of application: **02.04.2025**
(21) Application number: 24203318.1
(22) Date of filing: 27.09.2024
(51) Int. Cl.: H04W 74/0808, H04W 84/12

(54) **COORDINATED CHANNEL ACCESS IN WIRELESS COMMUNICATION SYSTEMS**

(30) Priority: 29.09.2023 US 202363586634 P; 26.09.2024 US 202418898483
(71) Applicant: Apple Inc., Cupertino, CA 95014 (US)
(72) Inventor: ABOUELSEOUD, Mohamed, Cupertino, 95014 (US); YAMANAKA, Akira, Cupertino, 95014 (US); LAN, Zhou, Cupertino, 95014 (US); GHOSH, Chittabrata, Cupertino, 95014 (US); BATRA, Anuj, Cupertino, 95014 (US); YONG, Su Khiong, Cupertino, 95014 (US); LEE, Wook Bong, Cupertino, 95014 (US); SHANI, Oren, Cupertino, 95014 (US); LIU, Yong, Cupertino, 95014 (US); KNECKT, Jarkko L., Cupertino, 95014 (US); WANG, Qi, Cupertino, 95014 (US)
(74) Representative: Wardle, Callum Tarn

(57) **Abstract**

Methods, systems and apparatuses for enhanced coordinated channel access including access points (APs) and non-access points (non-APs). A first non-access point (non-AP) in a group of at least two non-APs can receive, from a second non-AP of the group of at least two non-APs, signaling including information corresponding to a transmission opportunity (TXOP). Additionally, the first non-AP can transmit, in accordance with the information corresponding to the TXOP and scheduling information of the group of at least two non-APs, first data to one or more devices, wherein the first data is transmitted to the one or more devices in at least a portion of the TXOP.

## Description

### FIELD

The present application relates to wireless communications, including techniques for wireless communication among wireless stations and/or access points in a wireless networking system.

### DESCRIPTION OF THE RELATED ART

Wireless communication systems are rapidly growing in usage. Further, wireless communication technology has evolved from voice-only communications to also include the transmission of data, such as Internet and multimedia content. A popular short/intermediate range wireless communication standard is wireless local area network (WLAN). Most modern WLANs are based on the IEEE 802.11 standard (and/or 802.11, for short) and are marketed under the Wi-Fi brand name. WLAN networks link one or more devices to a wireless access point, which in turn provides connectivity to the wider area Internet.

In 802.11 systems, devices that wirelessly connect to each other are referred to as "stations", "mobile stations", "user devices", "user equipment", or STA or UE for short. Wireless stations can be either wireless access points or wireless clients (and/or mobile stations). Access points (APs), which are also referred to as wireless routers, act as base stations for the wireless network. APs transmit and receive radio frequency signals for communication with wireless client devices. APs can also couple to the Internet in a wired and/or wireless fashion. Wireless clients operating on an 802.11 network can be any of various devices such as laptops, tablet devices, smart phones, smart watches, or fixed devices such as desktop computers. Wireless client devices are referred to herein as user equipment (and/or UE for short). Some wireless client devices are also collectively referred to herein as mobile devices or mobile stations (although, as noted above, wireless client devices overall can be stationary devices as well).

Mobile electronic devices can take the form of smart phones or tablets that a user typically carries. Wearable devices (also referred to as accessory devices) are a newer form of mobile electronic device, one example being smart watches. Additionally, low-cost low-complexity wireless devices intended for stationary or nomadic deployment are also proliferating as part of the developing "Internet of Things". In other words, there is an increasingly wide range of desired device complexities, capabilities, traffic patterns, and other characteristics.

Some WLANs can utilize multi-link operation (MLO), e.g., using a plurality of channels (e.g., links) concurrently. APs and/or STAs capable of MLO can be referred to as multi-link devices (MLD). For example, APs capable of MLO can be referred to as AP-MLDs and STAs capable of MLO that are not acting as APs can be referred to as non-AP MLDs. Improvements in the field are desired.

### SUMMARY

Embodiments described herein relate to Methods, systems and apparatuses for enhanced coordinated channel access including access points (APs) and non-access points (non-APs) in wireless networking systems.

In some embodiments, a first non-access point (non-AP) station of a group of at least two non-AP stations can receive, from a second non-AP station of the group of at least two non-AP stations, signaling comprising information corresponding to a transmission opportunity (TXOP). Additionally, the first non-AP can transmit, in accordance with the information corresponding to the TXOP and scheduling information associated with the group of at least two non-AP stations, first data to one or more devices, wherein the first data is transmitted to the one or more devices in at least a portion of the TXOP.

According to some embodiments, the signaling comprising information corresponding to the TXOP can indicate for only the first non-AP station to transmit the first data using at least a portion of the TXOP. Furthermore, when the first non-AP station completes transmission of the first data prior to an end of the TXOP, the method can further comprise transmitting, to a group address of associated with the group of at least two non-AP stations, a control frame to terminate the TXOP, the control frame message comprising one or more parameters, according to some embodiments.

According to further embodiments, the method can further comprise transmitting, to the at least two non-AP stations, one or more multiple user block acknowledgement requests (MU-BAR) and receiving, from the at least two non-AP stations, one or more block acknowledgements (BAs). Additionally or alternatively, the signaling comprising information corresponding to the TXOP can indicate for the first non-AP station and one or more additional non-AP stations of the group of at least two non-AP stations to respectively transmit data to the one or more devices using at least a portion of the TXOP. Furthermore, when one of the at least two non-AP stations completes a respective transmission of data prior to an end of the TXOP, the method can further comprise receiving, based on a group address associated with the group of at least two non-AP stations, a control frame to terminate the TXOP, the control frame comprising one or more parameters, according to some embodiments.

In some embodiments, the group of at least two non-AP stations can be associated with a group address or group identifier (ID). Additionally or alternatively, the first data can be transmitted to one or more devices including at least one of one or more APs, one or more mobile APs, one or more non-APs, or one or more non-AP stations (STAs). According to some embodiments, the signaling comprising information corresponding to a transmission opportunity (TXOP) can further comprise a control frame including an address of the group of at least two non-AP stations. In some embodiments, the method can be performed after one or more contention periods have elapsed.

According to some embodiments, a processor can comprise memory storing instructions that, when executed, cause a first non-access point (non-AP) to establish, via an access channel, a wireless link with an access point (AP). Additionally, the instructions can be further executable to cause the first non-AP station to transmit, to the AP, a request corresponding to a transmission opportunity (TXOP) and comprising an address of the first non-AP station. Furthermore, the instructions can be further executable to cause the first non-AP station to receive a response from the AP and transmit, in accordance with scheduling information associated with the first non-AP station, first data in at least a portion of the TXOP.

In some embodiments, when the first non-AP station completes transmission of the first data prior to an end of the TXOP, the instructions can be further executable to cause the first non-AP station to broadcast, to a group address of a group of at least two non-AP stations, one or more control frames to invite the at least two non-AP stations to transmit. Furthermore, the request can include an indication for only one of the at least two non-AP stations to transmit data using at least a portion of the TXOP. Additionally or alternatively, the instructions can be further executable to cause the first non-AP station to receive, from one or more of the at least two non-AP stations, one or more invitation to transmit (ITS) messages. In some embodiments, the one or more ITS messages can indicate to the first non-AP station that a non-AP station has no data to transmit or that a non-AP station has completed transmission of data prior to an end of a portion of the TXOP.

According to further embodiments, an access point (AP) can comprise a radio and a processor operably coupled to the radio. Furthermore, the processor can be configured to cause the AP to establish, via an access channel, a wireless link with a first non-access point (non-AP) station in a group of at least two non-APs. Additionally, the processor can configured to cause the AP to receive, from the first non-AP station, signaling comprising at least one of an address of the group of at least two non-APs or a single non-AP station and a transmission opportunity (TXOP) sharing request indication. Furthermore, the processor can be configured to cause the AP to transmit, to the first non-AP station, a response comprising a TXOP sharing indication and transmit, to additional non-AP stations in the group of at least two non-AP stations, additional responses respectively comprising TXOP sharing indications.

In some embodiments, the processor can be further configured to cause the AP to transmit, to one or more non-AP stations of the group of at least two non-AP stations, one or more null data packet feedback report polls (NFRPs). Additionally, the processor can be further configured to cause the AP to transmit, to one or more non-AP stations of the group of at least two non-AP stations, one or more request to send (RTS) messages. Additionally or alternatively, the durations of the RTS messages can be maximum allowed sharing durations, according to some embodiments. In some embodiments, the processor can be further configured to cause the AP to receive, from one or more non-AP stations of the group of at least two non-AP stations, one or more control frames. Additionally, the durations of the control frames can indicate requested durations less than or equal to the maximum allowed sharing durations, according to some embodiments. Furthermore, the processor can be further configured to cause the AP to perform, in response to one or more non-AP stations of the group of at least two non-AP stations completing a transmission before an assigned time, a point coordination function interframe space (PIFS) recovery of the access channel.

This Summary is intended to provide a brief overview of some of the subject matter described in this document. Accordingly, it will be appreciated that the above-described features are merely examples and should not be construed to narrow the scope or spirit of the subject matter described herein in any way. Other features, aspects, and advantages of the subject matter described herein will become apparent from the following Detailed Description, Figures, and Claims.

### BRIEF DESCRIPTION OF THE DRAWINGS

A better understanding of the present subject matter can be obtained when the following detailed description of the embodiments is considered in conjunction with the following drawings.
Figure 1 illustrates an example wireless communication system, according to some embodiments.
Figure 2 illustrates an example simplified block diagram of a wireless device, according to some embodiments.
Figure 3 illustrates an example WLAN communication system, according to some embodiments.
Figure 4 illustrates an example simplified block diagram of a WLAN Access Point (AP), according to some embodiments.
Figure 5 illustrates an example simplified block diagram of a wireless station (STA), according to some embodiments.
Figure 6 illustrates an example simplified block diagram of a wireless node, according to some embodiments.
Figures 7-8 illustrates examples of MLDs, according to some embodiments.
Figures 9A-B illustrate example aspects of a channel access competition between devices, according to some embodiments.
Figures 10A-C illustrate example aspects of Transmission Opportunity (TXOP) sharing, according to some embodiments.
Figure 11 illustrates example aspects of TXOP sharing groups, according to some embodiments.
Figure 12 is a communication flow diagram illustrating an example method of enhanced STA coordinated channel access, according to some embodiments.
Figure 13 is a communication flow diagram illustrating an additional example method of enhanced STA coordinated channel access, according to some embodiments.
Figure 14 is a communication flow diagram illustrating an example method of enhanced AP coordinated channel access, according to some embodiments.
Figures 15-27 illustrate example aspects of enhanced coordinated channel access, according to some embodiments.

While the features described herein are susceptible to various modifications and alternative forms, specific embodiments thereof are shown by way of example in the drawings and are herein described in detail. It should be understood, however, that the drawings and detailed description thereto are not intended to be limiting to the particular form disclosed, but on the contrary, the intention is to cover all modifications, equivalents and alternatives falling within the spirit and scope of the subject matter as defined by the appended claims.

### DETAILED DESCRIPTION

### Acronyms

Various acronyms are used throughout the present application. Definitions of the most prominently used acronyms that can appear throughout the present application are provided below:
**UE:** User Equipment
**AP:** Access Point
**STA:** Wireless Station
**TX:** Transmission/Transmit
**RX:** Reception/Receive
**DL:** Downlink
**UL:** Uplink
**MLD:** Multi-link Device
**LAN:** Local Area Network
**WLAN:** Wireless LAN
**RAT:** Radio Access Technology
**ACK:** Acknowledgment
**BA:** Block Acknowledgment
**NACK:** Negative Acknowledgment
**N-BA:** Negative Block Acknowledgment
**OTA:** Over the Air
**SU:** Single-User
**MU:** Multi-User
**MAC:** Media Access Control
**CPE:** Client Privacy Enhanced
**BSS:** Basic Service Set
**OBSS:** Overlapping Basic Service Set
**SN:** Sequence Number
**PN:** Packet Number
**TID:** Transaction Identifier
**AID:** Association Identifier
**SSID:** Service Set Identifier
**SAP:** Service Access Point
**EDCA:** Enhanced Distributed Channel Access
**PPDU:** Physical Protocol Data Unit
**TXOP:** Transmission Opportunity
**TWT SP:** Target Wake Time Service Period
**P2P:** Peer-to-Peer
**RDG:** Reverse Direction Grant
**NAN:** Neighborhood Area Network
**RTS:** Request to Send
**CTS:** Clear to Send
**MU-BAR:** Multiple User-Block Acknowledgment Request
**ITS:** Invitation to Send
**PCF:** Point Coordination Function
**PIFS:** PCF Interframe Space
**TXS:** Triggered Transmission Opportunity Sharing
**TA:** Transmitter Address
**RA:** Receiver Address
**ICF:** Initial Control Frame
**NAV:** Network Allocation Vector
**CF:** Contention Free
**NDP:** Null Data Packet
**NFRP:** NDP Feedback Report Poll
**RD UL MU-MIMO:** Reverse Direction Multiple User- Multiple Input Multiple Output

### Terminology

The following is a glossary of terms used in this disclosure:

**Memory Medium** - Any of various types of non-transitory memory devices or storage devices. The term "memory medium" is intended to include an installation medium, e.g., a CD-ROM, floppy disks, or tape device; a computer system memory or random access memory such as DRAM, DDR RAM, SRAM, EDO RAM, Rambus RAM, etc.; a non-volatile memory such as a Flash, magnetic media, e.g., a hard drive, or optical storage; registers, or other similar types of memory elements, etc. The memory medium can include other types of non-transitory memory as well or combinations thereof. In addition, the memory medium can be located in a first computer system in which the programs are executed, or can be located in a second different computer system which connects to the first computer system over a network, such as the Internet. In the latter instance, the second computer system can provide program instructions to the first computer for execution. The term "memory medium" can include two or more memory mediums which can reside in different locations, e.g., in different computer systems that are connected over a network. The memory medium can store program instructions (e.g., embodied as computer programs) that can be executed by one or more processors.

**Carrier Medium** - a memory medium as described above, as well as a physical transmission medium, such as a bus, network, and/or other physical transmission medium that conveys signals such as electrical, electromagnetic, or digital signals.

**Computer System** - any of various types of computing or processing systems, including a personal computer system (PC), mainframe computer system, workstation, network appliance, Internet appliance, personal digital assistant (PDA), television system, grid computing system, or other device or combinations of devices. In general, the term "computer system" can be broadly defined to encompass any device (and/or combination of devices) having at least one processor that executes instructions from a memory medium.

**Mobile Device (and/or Mobile Station)** - any of various types of computer systems devices which are mobile or portable and which performs wireless communications using WLAN communication. Examples of mobile devices include mobile telephones or smart phones (e.g., iPhone^{™}, Android^{™}-based phones), and tablet computers such as iPad^{™}, Samsung Galaxy^{™}, etc. Various other types of devices would fall into this category if they include Wi-Fi or both cellular and Wi-Fi communication capabilities, such as laptop computers (e.g., MacBook^{™}), portable gaming devices (e.g., Nintendo DS^{™}, PlayStation Portable^{™}, Gameboy Advance^{™}, iPhone^{™}), portable Internet devices, and other handheld devices, as well as wearable devices such as smart watches, smart glasses, headphones, pendants, earpieces, etc. In general, the term "mobile device" can be broadly defined to encompass any electronic, computing, and/or telecommunications device (and/or combination of devices) which is easily transported by a user and capable of wireless communication using WLAN or Wi-Fi.

**Wireless Device (and/or Wireless Station)** - any of various types of computer systems devices which performs wireless communications using WLAN communications. As used herein, the term "wireless device" can refer to a mobile device, as defined above, or to a stationary device, such as a stationary wireless client or a wireless base station. For example, a wireless device can be any type of wireless station of an 802.11 system, such as an access point (AP) or a client station (STA or UE). Further examples include televisions, media players (e.g., AppleTV^{™}, Roku^{™}, Amazon FireTV^{™}, Google Chromecast^{™}, etc.), refrigerators, laundry machines, thermostats, and so forth.

**WLAN** - The term "WLAN" has the full breadth of its ordinary meaning, and at least includes a wireless communication network or RAT that is serviced by WLAN access points and which provides connectivity through these access points to the Internet. Most modern WLANs are based on IEEE 802.11 standards and are marketed under the name "Wi-Fi". A WLAN network is different from a cellular network.

**Processing Element** - refers to various implementations of digital circuitry that perform a function in a computer system. Additionally, processing element can refer to various implementations of analog or mixed-signal (combination of analog and digital) circuitry that perform a function (and/or functions) in a computer or computer system. Processing elements include, for example, circuits such as an integrated circuit (IC), ASIC (Application Specific Integrated Circuit), portions or circuits of individual processor cores, entire processor cores, individual processors, programmable hardware devices such as a field programmable gate array (FPGA), and/or larger portions of systems that include multiple processors.

**Automatically** - refers to an action or operation performed by a computer system (e.g., software executed by the computer system) or device (e.g., circuitry, programmable hardware elements, ASICs, etc.), without user input directly specifying or performing the action or operation. Thus, the term "automatically" is in contrast to an operation being manually performed or specified by the user, where the user provides input to directly perform the operation. An automatic procedure can be initiated by input provided by the user, but the subsequent actions that are performed "automatically" are not specified by the user, e.g., are not performed "manually", where the user specifies each action to perform. For example, a user filling out an electronic form by selecting each field and providing input specifying information (e.g., by typing information, selecting check boxes, radio selections, etc.) is filling out the form manually, even though the computer system must update the form in response to the user actions. The form can be automatically filled out by the computer system where the computer system (e.g., software executing on the computer system) analyzes the fields of the form and fills in the form without any user input specifying the answers to the fields. As indicated above, the user can invoke the automatic filling of the form, but is not involved in the actual filling of the form (e.g., the user is not manually specifying answers to fields but rather they are being automatically completed). The present specification provides various examples of operations being automatically performed in response to actions the user has taken.

**Concurrent** - refers to parallel execution or performance, where tasks, processes, signaling, messaging, or programs are performed in an at least partially overlapping manner. For example, concurrency can be implemented using "strong" or strict parallelism, where tasks are performed (at least partially) in parallel on respective computational elements, or using "weak parallelism", where the tasks are performed in an interleaved manner, e.g., by time multiplexing of execution threads.

**Configured to** - Various components can be described as "configured to" perform a task or tasks. In such contexts, "configured to" is a broad recitation generally meaning "having structure that" performs the task or tasks during operation. As such, the component can be configured to perform the task even when the component is not currently performing that task (e.g., a set of electrical conductors can be configured to electrically connect a module to another module, even when the two modules are not connected). In some contexts, "configured to" can be a broad recitation of structure generally meaning "having circuitry that" performs the task or tasks during operation. As such, the component can be configured to perform the task even when the component is not currently on. In general, the circuitry that forms the structure corresponding to "configured to" can include hardware circuits.

Various components can be described as performing a task or tasks, for convenience in the description. Such descriptions should be interpreted as including the phrase "configured to." Reciting a component that is configured to perform one or more tasks is expressly intended not to invoke 35 U.S.C. § 112(f) interpretation for that component.

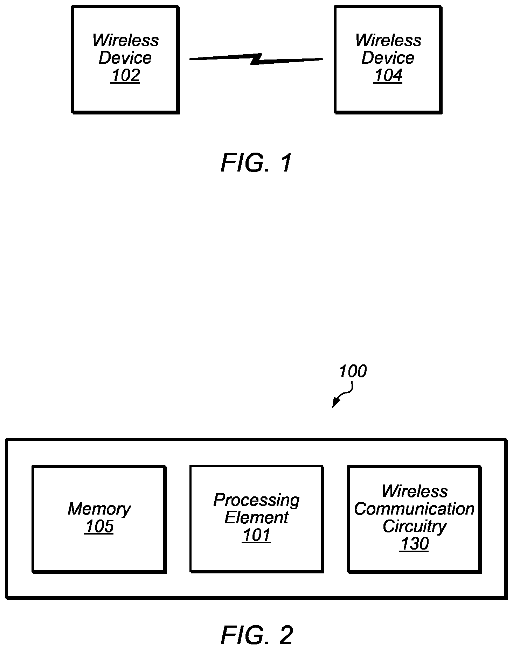

### Figures 1-2 - Wireless Communication System

Figure 1 illustrates an exemplary (and simplified) wireless communication system in which aspects of this disclosure can be implemented. It is noted that the system of Figure 1 is merely one example of a possible system, and embodiments of this disclosure can be implemented in any of various systems, as desired.

As shown, the exemplary wireless communication system includes a ("first") wireless device 102 in communication with another ("second") wireless device. The first wireless device 102 and the second wireless device 104 can communicate wirelessly using any of a variety of wireless communication techniques, potentially including ranging wireless communication techniques.

As one possibility, the first wireless device 102 and the second wireless device 104 can perform ranging using wireless local area networking (WLAN) communication technology (e.g., IEEE 802.11 / Wi-Fi based communication) and/or techniques based on WLAN wireless communication. One or both of the wireless device 102 and the wireless device 104 can also be capable of communicating via one or more additional wireless communication protocols, such as any of Bluetooth (BT), Bluetooth Low Energy (BLE), near field communication (NFC), LTE, LTE-Advanced (LTE-A), NR, ultra-wideband (UWB), etc.

The wireless devices 102 and 104 can be any of a variety of types of wireless device. As one possibility, one or more of the wireless devices 102 and/or 104 can be a substantially portable wireless user equipment (UE) device, such as a smart phone, handheld device, a wearable device such as a smart watch, a tablet, a motor vehicle, or virtually any type of wireless device. As another possibility, one or more of the wireless devices 102 and/or 104 can be a substantially stationary device, such as a set top box, media player (e.g., an audio or audiovisual device), gaming console, desktop computer, appliance, door, access point, base station, or any of a variety of other types of devices.

Each of the wireless devices 102 and 104 can include wireless communication circuitry configured to facilitate the performance of wireless communication, which can include various digital and/or analog radio frequency (RF) components, a processor that is configured to execute program instructions stored in memory, a programmable hardware element such as a field-programmable gate array (FPGA), and/or any of various other components. The wireless device 102 and/or the wireless device 104 can perform any of the method embodiments described herein, or any portion of any of the method embodiments described herein, using any or all of such components.

Each of the wireless devices 102 and 104 can include one or more antennas for communicating using one or more wireless communication protocols. In some cases, one or more parts of a receive and/or transmit chain can be shared between multiple wireless communication standards; for example, a device might be configured to communicate using either of Bluetooth or Wi-Fi using partially or entirely shared wireless communication circuitry (e.g., using a shared radio or at least shared radio components). The shared communication circuitry can include a single antenna, or can include multiple antennas (e.g., for MIMO) for performing wireless communications. Alternatively, a device can include separate transmit and/or receive chains (e.g., including separate antennas and other radio components) for each wireless communication protocol with which it is configured to communicate. As a further possibility, a device can include one or more radios or radio components which are shared between multiple wireless communication protocols, and one or more radios or radio components which are used exclusively by a single wireless communication protocol. For example, a device might include a shared radio for communicating using one or more of LTE and/or 5G NR, and separate radios for communicating using each of Wi-Fi, UWB, and Bluetooth. Other configurations are also possible.

As previously noted, aspects of this disclosure can be implemented in conjunction with the wireless communication system of Figure 1. For example, a wireless device (e.g., either of wireless devices 102 or 104) can be configured to perform methods for robust discovery of a new access point (AP) in AP MLD, robust link addition to an AP MLD association, AP beaconing modes when the AP is added or deleted to/from an AP MLD, and robust BSS transition management (BTM) signaling to steer a non-AP MLD to a best AP MLD and to most suitable APs, as well as privacy improvements for associated non-AP MLD.

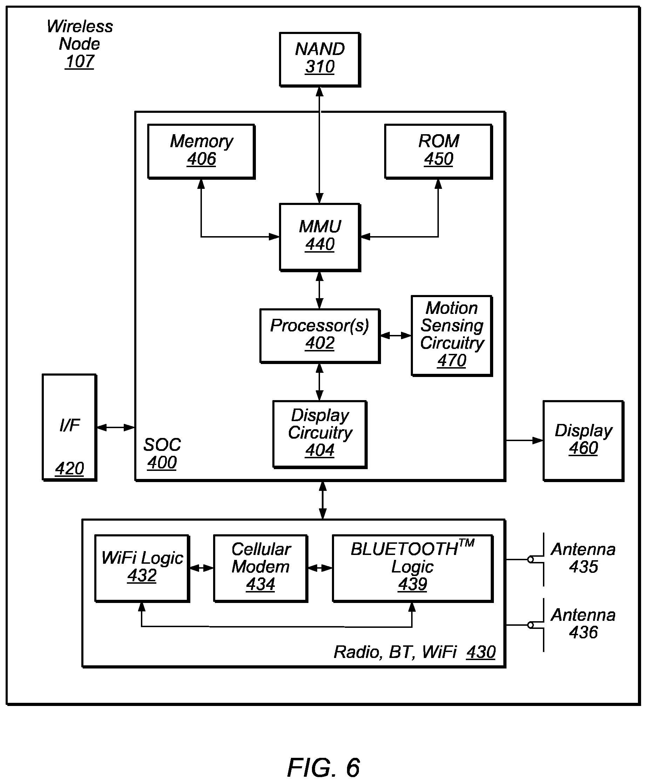

Figure 6 illustrates an exemplary wireless device 100 (e.g., corresponding to wireless devices 102 and/or 104) that can be configured for use in conjunction with various aspects of the present disclosure. The device 100 can be any of a variety of types of devices and can be configured to perform any of a variety of types of functionality. The device 100 can be a substantially portable device or can be a substantially stationary device, potentially including any of a variety of types of devices. The device 100 can be configured to perform one or more ranging wireless communication techniques or features, such as any of the techniques or features illustrated and/or described subsequently herein with respect to any or all of the Figures.

As shown, the device 100 can include a processing element 101. The processing element can include or be coupled to one or more memory elements. For example, the device 100 can include one or more memory media (e.g., memory 105), which can include any of a variety of types of memory and can serve any of a variety of functions. For example, memory 105 could be RAM serving as a system memory for processing element 101. Other types and functions are also possible.

Additionally, the device 100 can include wireless communication circuitry 130. The wireless communication circuitry can include any of a variety of communication elements (e.g., antenna(s) for wireless communication, analog and/or digital communication circuitry/controllers, etc.) and can enable the device to wirelessly communicate using one or more wireless communication protocols.

Note that in some cases, the wireless communication circuitry 130 can include its own processing element (e.g., a baseband processor), e.g., in addition to the processing element 101. For example, the processing element 101 can be an 'application processor' whose primary function can be to support application layer operations in the device 100, while the wireless communication circuitry 130 can be a 'baseband processor' whose primary function can be to support baseband layer operations (e.g., to facilitate wireless communication between the device 100 and other devices) in the device 100. In other words, in some cases the device 100 can include multiple processing elements (e.g., can be a multi-processor device). Other configurations (e.g., instead of or in addition to an application processor / baseband processor configuration) utilizing a multi-processor architecture are also possible.

The device 100 can additionally include any of a variety of other components (not shown) for implementing device functionality, depending on the intended functionality of the device 100, which can include further processing and/or memory elements (e.g., audio processing circuitry), one or more power supply elements (which can rely on battery power and/or an external power source) user interface elements (e.g., display, speaker, microphone, camera, keyboard, mouse, touchscreen, etc.), and/or any of various other components.

The components of the device 100, such as processing element 101, memory 105, and wireless communication circuitry 130, can be operatively coupled via one or more interconnection interfaces, which can include any of a variety of types of interfaces, possibly including a combination of multiple types of interface. As one example, a USB high-speed inter-chip (HSIC) interface can be provided for inter-chip communications between processing elements. Alternatively (and/or in addition), a universal asynchronous receiver transmitter (UART) interface, a serial peripheral interface (SPI), inter-integrated circuit (I2C), system management bus (SMBus), and/or any of a variety of other communication interfaces can be used for communications between various device components. Other types of interfaces (e.g., intra-chip interfaces for communication within processing element 101, peripheral interfaces for communication with peripheral components within or external to device 100, etc.) can also be provided as part of device 100.

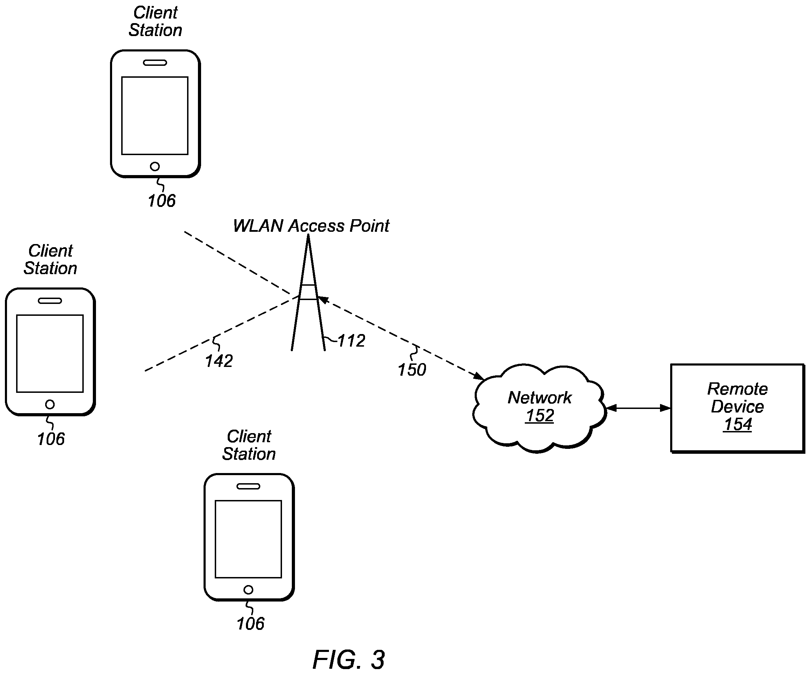

### Figure 3 - WLAN System

Figure 3 illustrates an example WLAN system according to some embodiments. As shown, the exemplary WLAN system includes a plurality of wireless client stations or devices (e.g., STAs or user equipment (UEs)), 106 that are configured to communicate over a wireless communication channel 142 with an Access Point (AP) 112. The AP 112 can be a Wi-Fi access point. The AP 112 can communicate via a wired and/or a wireless communication channel 150 with one or more other electronic devices (not shown) and/or another network 152, such as the Internet. Additional electronic devices, such as the remote device 154, can communicate with components of the WLAN system via the network 152. For example, the remote device 154 can be another wireless client station, a server associated with an application executing on one of the STAs 106, etc. The WLAN system can be configured to operate according to any of various communications standards, such as the various IEEE 802.11 standards. In some embodiments, at least one wireless device 106 is configured to communicate directly with one or more neighboring mobile devices, without use of the access point 112.

Further, in some embodiments, a wireless device 106 (which can be an exemplary implementation of device 100) can be configured to perform methods for robust discovery of a new access point (AP) in AP MLD, robust link addition to an AP MLD association, AP beaconing modes when the AP is added or deleted to/from an AP MLD, and robust BSS transition management (BTM) signaling to steer a non-AP MLD to a best AP MLD and to most suitable APs, as well as privacy improvements for associated non-AP MLD.

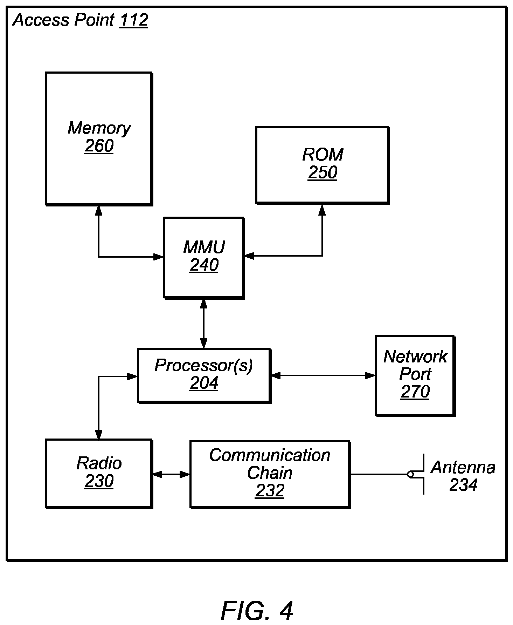

### Figure 4 - Access Point Block Diagram

Figure 4 illustrates an exemplary block diagram of an access point (AP) 112, which can be one possible exemplary implementation of the device 100 illustrated in Figure 4. It is noted that the block diagram of the AP of Figure 4 is only one example of a possible system. As shown, the AP 112 can include processor(s) 204 which can execute program instructions for the AP 112. The processor(s) 204 can also be coupled (directly or indirectly) to memory management unit (MMU) 240, which can be configured to receive addresses from the processor(s) 204 and to translate those addresses to locations in memory (e.g., memory 260 and read only memory (ROM) 250) or to other circuits or devices.

The AP 112 can include at least one network port 270. The network port 270 can be configured to couple to a wired network and provide a plurality of devices, such as mobile devices 106, access to the Internet. For example, the network port 270 (and/or an additional network port) can be configured to couple to a local network, such as a home network or an enterprise network. For example, port 270 can be an Ethernet port. The local network can provide connectivity to additional networks, such as the Internet.

The AP 112 can include at least one antenna 234, which can be configured to operate as a wireless transceiver and can be further configured to communicate with mobile device 106 via wireless communication circuitry 230. The antenna 234 communicates with the wireless communication circuitry 230 via communication chain 232. Communication chain 232 can include one or more receive chains, one or more transmit chains or both. The wireless communication circuitry 230 can be configured to communicate via Wi-Fi or WLAN, e.g., 802.11. The wireless communication circuitry 230 can also, or alternatively, be configured to communicate via various other wireless communication technologies, including, but not limited to, Long-Term Evolution (LTE), LTE Advanced (LTE-A), 5G NR, UWB, etc., for example when the AP is co-located with a base station in case of a small cell, or in other instances when it can be desirable for the AP 112 to communicate via various different wireless communication technologies.

Further, in some embodiments, as further described below, AP 112 can be configured to perform methods for robust discovery of a new access point (AP) in AP MLD, robust link addition to an AP MLD association, AP beaconing modes when the AP is added or deleted to/from an AP MLD, and robust BSS transition management (BTM) signaling to steer a non-AP MLD to a best AP MLD and to most suitable APs, as well as privacy improvements for associated non-AP MLD.

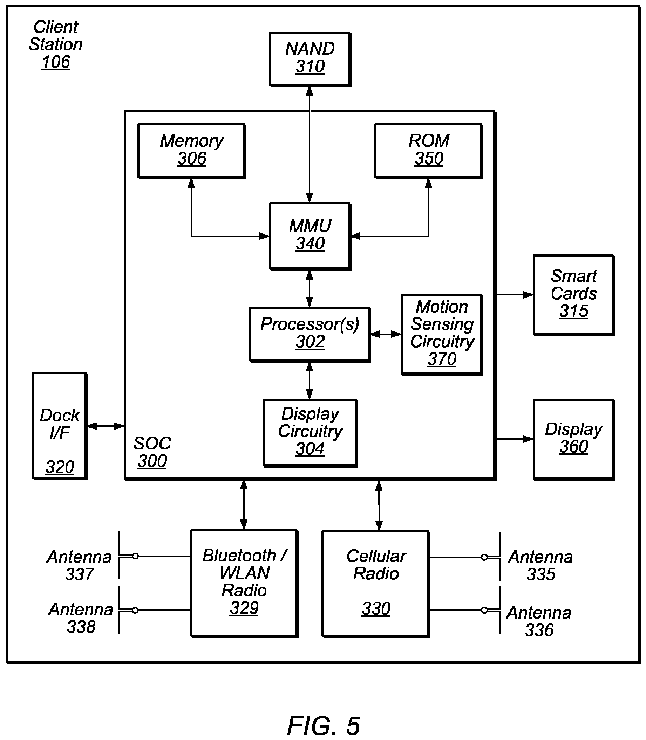

### Figure 5 - Client Station Block Diagram

Figure 5 illustrates an example simplified block diagram of a client station 106, which can be one possible exemplary implementation of the device 100 illustrated in Figure 4. According to embodiments, client station 106 can be a user equipment (UE) device, a mobile device or mobile station, and/or a wireless device or wireless station. As shown, the client station 106 can include a system on chip (SOC) 300, which can include portions for various purposes. The SOC 300 can be coupled to various other circuits of the client station 106. For example, the client station 106 can include various types of memory (e.g., including NAND flash 310), a connector interface (I/F) (and/or dock) 320 (e.g., for coupling to a computer system, dock, charging station, etc.), the display 360, cellular communication circuitry (e.g., cellular radio) 330 such as for 5G NR, LTE, etc., and short to medium range wireless communication circuitry (e.g., Bluetooth^{™}/WLAN radio) 329 (e.g., Bluetooth^{™} and WLAN circuitry). The client station 106 can further include one or more smart cards 315 that incorporate SIM (Subscriber Identity Module) functionality, such as one or more UICC(s) (Universal Integrated Circuit Card(s)). The cellular communication circuitry 330 can couple to one or more antennas, such as antennas 335 and 336 as shown. The short to medium range wireless communication circuitry 329 can also couple to one or more antennas, such as antennas 337 and 338 as shown. Alternatively, the short to medium range wireless communication circuitry 329 can couple to the antennas 335 and 336 in addition to, or instead of, coupling to the antennas 337 and 338. The short to medium range wireless communication circuitry 329 can include multiple receive chains and/or multiple transmit chains for receiving and/or transmitting multiple spatial streams, such as in a multiple-input multiple output (MIMO) configuration. Some or all components of the short to medium range wireless communication circuitry 329 and/or the cellular communication circuitry 330 can be used for ranging communications, e.g., using WLAN, Bluetooth, and/or cellular communications.

As shown, the SOC 300 can include processor(s) 302, which can execute program instructions for the client station 106 and display circuitry 304, which can perform graphics processing and provide display signals to the display 360. The SOC 300 can also include motion sensing circuitry 370 which can detect motion of the client station 106, for example using a gyroscope, accelerometer, and/or any of various other motion sensing components. The processor(s) 302 can also be coupled to memory management unit (MMU) 340, which can be configured to receive addresses from the processor(s) 302 and translate those addresses to locations in memory (e.g., memory 306, read only memory (ROM) 350, NAND flash memory 310) and/or to other circuits or devices, such as the display circuitry 304, cellular communication circuitry 330, short range wireless communication circuitry 329, connector interface (I/F) 320, and/or display 360. The MMU 340 can be configured to perform memory protection and page table translation or set up. In some embodiments, the MMU 340 can be included as a portion of the processor(s) 302.

As noted above, the client station 106 can be configured to communicate wirelessly directly with one or more neighboring client stations. The client station 106 can be configured to communicate according to a WLAN RAT for communication in a WLAN network, such as that shown in Figure 3 or for ranging as shown in Figure 1.

As described herein, the client station 106 can include hardware and software components for implementing the features described herein. For example, the processor 302 of the client station 106 can be configured to implement part or all of the features described herein, e.g., by executing program instructions stored on a memory medium (e.g., a non-transitory computer-readable memory medium). Alternatively (and/or in addition), processor 302 can be configured as a programmable hardware element, such as an FPGA (Field Programmable Gate Array), or as an ASIC (Application Specific Integrated Circuit). Alternatively (and/or in addition) the processor 302 of the UE 106, in conjunction with one or more of the other components 300, 304, 306, 310, 315, 320, 329, 330, 335, 336, 337, 338, 340, 350, 360, 370 can be configured to implement part or all of the features described herein.

In addition, as described herein, processor 302 can include one or more processing elements. Thus, processor 302 can include one or more integrated circuits (ICs) that are configured to perform the functions of processor 302. In addition, each integrated circuit can include circuitry (e.g., first circuitry, second circuitry, etc.) configured to perform the functions of processor(s) 204.

Further, as described herein, cellular communication circuitry 330 and short-range wireless communication circuitry 329 can each include one or more processing elements. In other words, one or more processing elements can be included in cellular communication circuitry 330 and also in short range wireless communication circuitry 329. Thus, each of cellular communication circuitry 330 and short-range wireless communication circuitry 329 can include one or more integrated circuits (ICs) that are configured to perform the functions of cellular communication circuitry 330 and short-range wireless communication circuitry 329, respectively. In addition, each integrated circuit can include circuitry (e.g., first circuitry, second circuitry, etc.) configured to perform the functions of cellular communication circuitry 330 and short-range wireless communication circuitry 329.

### Figure 6 - Wireless Node Block Diagram

Figure 6 illustrates one possible block diagram of a wireless node 107, which can be one possible exemplary implementation of the device 100 illustrated in Figure 6. As shown, the wireless node 107 can include a system on chip (SOC) 400, which can include portions for various purposes. For example, as shown, the SOC 400 can include processor(s) 402 which can execute program instructions for the wireless node 107, and display circuitry 404 which can perform graphics processing and provide display signals to the display 460. The SOC 400 can also include motion sensing circuitry 470 which can detect motion of the wireless node 107, for example using a gyroscope, accelerometer, and/or any of various other motion sensing components. The processor(s) 402 can also be coupled to memory management unit (MMU) 440, which can be configured to receive addresses from the processor(s) 402 and translate those addresses to locations in memory (e.g., memory 406, read only memory (ROM) 450, flash memory 410). The MMU 440 can be configured to perform memory protection and page table translation or set up. In some embodiments, the MMU 440 can be included as a portion of the processor(s) 402.

As shown, the SOC 400 can be coupled to various other circuits of the wireless node 107. For example, the wireless node 107 can include various types of memory (e.g., including NAND flash 410), a connector interface 420 (e.g., for coupling to a computer system, dock, charging station, etc.), the display 460, and wireless communication circuitry 430 (e.g., for 5G NR, LTE, LTE-A, Bluetooth, Wi-Fi, NFC, UWB, etc.).

The wireless node 107 can include at least one antenna, and in some embodiments, multiple antennas 435 and 436, for performing wireless communication with base stations and/or other devices. For example, the wireless node 107 can use antennas 435 and 436 to perform the wireless communication. As noted above, the wireless node 107 can in some embodiments be configured to communicate wirelessly using a plurality of wireless communication standards or radio access technologies (RATs).

The wireless communication circuitry 430 can include Wi-Fi Logic 432, a Cellular Modem 434, and Bluetooth Logic 439. The Wi-Fi Logic 432 is for enabling the wireless node 107 to perform Wi-Fi communications, e.g., on an 802.11 network. The Bluetooth Logic 439 is for enabling the wireless node 107 to perform Bluetooth communications. The cellular modem 434 can be capable of performing cellular communication according to one or more cellular communication technologies. Some or all components of the wireless communication circuitry 430 can be used for ranging communications, e.g., using WLAN, Bluetooth, and/or cellular communications.

As described herein, wireless node 107 can include hardware and software components for implementing embodiments of this disclosure. For example, one or more components of the wireless communication circuitry 430 (e.g., Wi-Fi Logic 432) of the wireless node 107 can be configured to implement part or all of the methods described herein, e.g., by a processor executing program instructions stored on a memory medium (e.g., a non-transitory computer-readable memory medium), a processor configured as an FPGA (Field Programmable Gate Array), and/or using dedicated hardware components, which can include an ASIC (Application Specific Integrated Circuit).

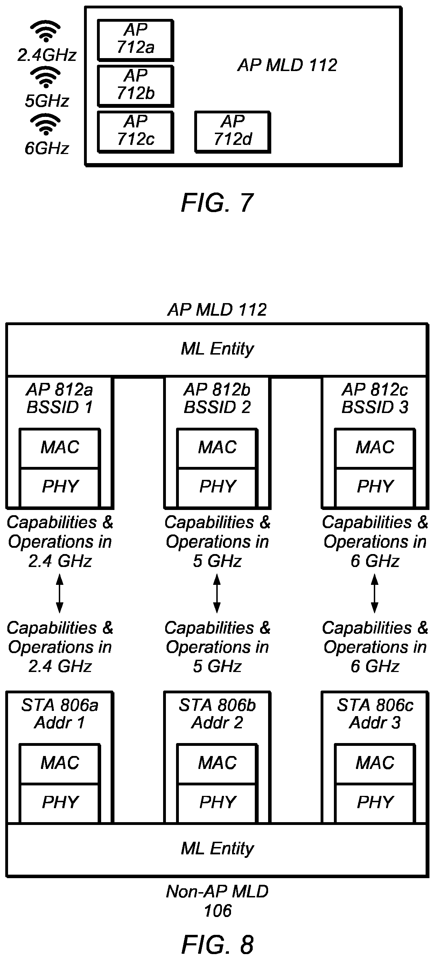

### Figures 7-8 - Multi-Link Device (MLD) operation

One or more IEEE 802.11 releases, such as IEEE 802.11bi, can include Multi-link Device (MLD) capabilities. In current implementations, an access point (AP) Multi Link Device (MLD) node can manage its affiliated APs. Thus, an AP MLD node can modify, add, and/or subtract affiliated APs to increase capacity, manage Basic Service Sets (BSSs) interference and coverage, including switching APs to operate in channels with less interference, and/or steer associated non-AP MLD nodes to operate on better performing APs and/or AP MLD nodes.

Figure 7 illustrates an AP MLD 112, according to some embodiments. The AP MLD can operate any number of affiliated APs, e.g., APs 712a, 712b, 712c, and 712d in the illustrated example. The affiliated APs can operate on any of various frequency bands. Affiliated APs can operate on different frequency ranges (e.g., channels) of the same band, or on different frequency bands.

The AP MLD can provide the affiliated APs from a single physical device, e.g., a single shared housing and potentially using the same antenna(s). In some embodiments, the AP MLD can provide the APs from multiple distinct devices (e.g., a first device can provide one or more APs, a second device can provide a different one or more APs, etc.). In some embodiments, various affiliated APs can be separated spatially (e.g., using beams in different directions, using different antennas with a shared housing (e.g., antennas of a same physical device), and/or of different devices, etc.).

In some embodiments, spatially separated affiliated APs can operate on a same (or overlapping) channel(s).

Figure 8 illustrates an AP MLD 112 in communication with a non-AP MLD 106, according to some embodiments.

As shown, the AP MLD 112 can operate three affiliated APs. In the illustrated example, AP 812a can operate in a 2.4 GHz band, AP 812b can operate in a 5 GHz band, and AP 812c can operate in a 6 GHz band. It will be appreciated that any number of affiliated APs can be used in any combination of bands. For example, the AP MLD can operate multiple affiliated APs in one band and/or can possibly not operate any affiliated APs in a band. The affiliated APs can include various layers, e.g., media access control (MAC) and/or physical (PHY) layers, among various possibilities. The affiliated APs can use different basic service sets (BSS) and/or different BSS identifiers (BSSID), e.g., BSSIDs 1-3.

As shown, the non-AP MLD 106 can operate three affiliated STAs, e.g., corresponding to the three affiliated APs. In the illustrated example, STA 806a can operate in the 2.4 GHz band, STA 806b can operate in a 5 GHz band, and STA 806c can operate in a 6 GHz band. The STAs can communicate with the corresponding APs. It will be appreciated that any number of affiliated STAs can be used in any combination of bands. For example, the non-AP MLD can operate multiple affiliated STAs in one band and/or can possibly not operate any affiliated STAs in a band. The non-AP MLD can operate STAs corresponding to some, none, or all of the APs of the AP MLD. The affiliated STAs can include various layers, e.g., PHY and/or MAC layers, among various possibilities. The affiliated STAs can use different addresses, e.g., Addr 1-3.

The non-AP MLD can provide the affiliated STAs from a single physical device, e.g., a single shared housing and potentially using the same antenna(s). In some embodiments, the non-AP MLD can provide the STAs from multiple distinct devices (e.g., a first device can provide one or more STAs, a second device can provide a different one or more STAs, etc.). In some embodiments, various affiliated STAs can be separated spatially (e.g., using beams in different directions, using different antennas with a shared housing (e.g., antennas of a same physical device), and/or of different devices, etc.).

The various affiliated STAs and APs can communicate concurrently / simultaneously. For example, STA 806a can exchange uplink and/or downlink data with AP 812a on a first link while STA 806b exchanges uplink and/or downlink data with AP 812b on a second link, etc. It will be appreciated that such concurrent communication can include (e.g., different) data being exchanged at the same time, overlapping times, and/or different times on different links. For example, data between the AP MLD and non-AP MLD can be routed over the first available link and/or a link selected based on other criteria (e.g., lowest energy use, etc.). For example, a first packet or portion of data can be sent over a first link and concurrently a second packet or portion of data can be sent over a second link.

In some embodiments, the AP MLD and non-AP MLD can include respective ML entities. An ML entity can provide upper MAC functionality that control the separate APs and/or STAs and can control traffic delivery through available links, e.g. between the various APs and STAs. The respective MLDs (e.g., AP and non-AP) can have only one respective MAC SAP interface. The ML entity can manage this interface. The ML entity can manage transmission buffering (e.g., bookkeeping and link selection in the transmitter) and data re-order buffering in reception (e.g., combination of the data that is transmitted in different links).

The AP MLD 112 and non-AP MLD 106 can exchange information about their respective operations, operating parameters, and/or capabilities.

The non-AP MLD can have various capabilities for operating a STA in a particular band. The capabilities can be different for different bands. For example, the capabilities in a band can describe the maximum (e.g., fastest, most flexible, most powerful, highest throughput, etc.) parameter values that a STA of the non-AP MLD can use. Operations or operating parameters can describe the parameter values that are currently in use or planned to be in use at a future time.

For example, the parameters can include an applicable PHY version and its parameters. The parameters can describe supported services and transmission formats that are available. The parameters can also describe available resources, bandwidths and number of spatial streams. The parameters can describe power save support parameters which can enable low power transmissions. For instance, an AP can support Target Wake Time (TWT) power save.

In some embodiments, the links can be located so closely (e.g., spatially and/or in frequency), that non-AP STA can possibly not operate them independently (e.g., due to limits of the device and/or to manage resources or performance). APs can support STAs (e.g., non-AP MLDs) that are not capable of simultaneously transmitting and receiving on the link pair.

In some embodiments, the non-AP MLD can operate STAs communicating with multiple AP-MLDs. For example, a first STA can communicate with a first AP MLD and a second STA can communicate with a second AP MLD. Similarly, an AP MLD can communicate with multiple STAs. For example, one affiliated AP can communicate with multiple STAs.

In the illustrated example, the non-AP MLD operates a number of STAs equal to the number of APs provided by the AP MLD. However, different numbers are possible. For example, the AP MLD can provide more APs than the number of STAs operated by the non-AP MLD or vice versa. The number of APs and/or number of STAs can change over time.

According to some embodiments, it can be beneficial for client privacy enhanced (CPE) stations (STAs) or clients to change or adjust certain parameters used for performing communications with an AP. For example, eavesdroppers can seek to intercept, extract or listen in on communications between certain CPE STAs and APs. Accordingly, clients can seek to perform more secure communications between the CPE STAs and APs using various techniques involving address changing or related parameter adjustments.

For example, it can be beneficial for a CPE Client to change its own over-the-air (OTA) media access control (MAC) address used for communicating with an AP when reassociating from one CPE AP to another CPE AP. Additionally or alternatively, it can be beneficial for a CPE Client to initiate changing its own OTA MAC address used with a CPE AP in an associated state (e.g., STA State 4) without any loss of connection. In some embodiments, it can be beneficial for a CPE Client to initiate changing the OTA MAC addresses of all associated CPE Client's in the base station system (BSS) (e.g., those CPE Clients in associated STA State 4) simultaneously without any loss of connection. Furthermore, it can be beneficial for a CPE client and CPE AP to change the transmitted sequence number (SN), packet number (PN) and transaction identifier (TID) to an uncorrelated new value on downlink and uplink to new values in an associated STA State 4, without any loss of connection, according to some embodiments. Moreover, it can be further beneficial for a CPE Client and CPE AP to change the CPE Client's association identifier (AID) to an uncorrelated new value in an associated STA State 4, without any loss of connection.

### Enhanced Coordinated Channel Access in Wireless Networking Systems

Channel access delay can be considered as one of the main sources of latency and therefore can contribute significantly to cases involving low latency among STAs and APs. For example, STAs compete with other STAs (including APs) in the BSS (as well as OBSS) to gain channel access, according to some embodiments. Furthermore, UL trigger-based channel access relies on APs gaining access to the channel and on the AP scheduling the UL traffic. Accordingly and as one example, WLAN channel access can be especially inefficient when many users contend for short transmissions. In this scenario, the channel can be fragmented and collisions can occasionally occur. Furthermore, short TXOPs can result in inefficient use of the channel and long TXOPs can increase the delay for other users to access the channel, according to some embodiments.

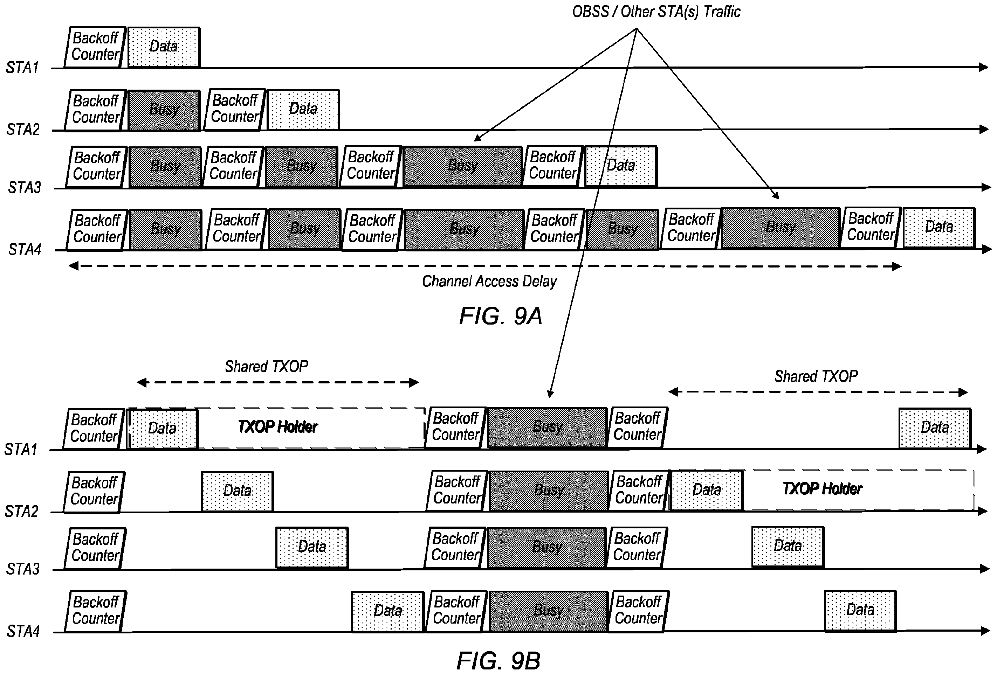

### Figures 9A-B -Channel Access Competition

Figures 9A-B illustrate example aspects of a channel access competition between devices, according to some embodiments. For example, Figure 9A illustrates a scenario involving uplink (UL) enhanced distributed channel access (EDCA) delays that can occur when a STA competes with other STAs in the same BSS as well as due to AP and OBSS traffic. More specifically, Figure 9A illustrates four STAs (STAs 1-4) attempting to access a channel in such an environment. Accordingly and as shown in Figure 9A, STA 1 can gain access to the channel after a backoff counter has expired and proceed to transmit data (e.g., UL data to an AP or P2P data to a STA). Accordingly, STAs 2-3 can be considered to be busy while STA 1 is transmitting said data, according to some embodiments. Next, STA2 can then gain access the channel and transmit its data. However, STA 3 and STA 4 can experience additional and longer periods in which they are busy due to OBSS traffic and other STAs (e.g., different manufacturers than those of STAs 1-4) traffic in the channel which ultimately results in a longer channel access delay. Furthermore, in such a congested environment, the probability of accessing the channel decreases as the number of STAs increases, according to some embodiments.

Figure 9B illustrates 9A illustrates a scenario involving UL TXOP sharing and delays that can occur when a STA competes with other STAs in the same BSS as well as due to AP and OBSS traffic. More specifically, Figure 9B illustrates four STAs (STAs 1-4) which can form a group due to sharing a same or similar manufacturer and further coordinate with each other to access the channel. Accordingly, once a STA accesses the channel (e.g., STA 1 in Figure 9B), it can be the TXOP holder and share the TXOP with the other STAs in the same group (e.g., STAs 2-4). Accordingly, after each STA transmission, the TXOP can be shared with the next STA in the group. Additionally, the group of STAs can all experience additional and longer periods in which they are busy due to OBSS traffic and other STAs (e.g., different manufacturers than those of STAs 1-4) traffic in the channel. Furthermore, after another round of contention, STA 2 can be the first to gain access to the channel (e.g., be the TXOP holder) and can subsequently share the TXOP with STAs 3, 4, and 1, respectively. Figure 9B illustrates that the probability of accessing the channel increases as the number of the STAs in the coordination group increases. However, the TXOP durations shared in the STA group can decrease as the number of STAs in the coordination group increases, according to some embodiments.

In some instances, small amounts of traffic can need to be transmitted regularly by multiple STAs. For example, multiple STAs can contend to share a TXOP among them. More specifically, in infra-UL boosting, multiple STAs can contend to increase probability of access channel, according to some embodiments. Additionally, P2P example communications can include periodical access to the channel with a high cadence to transmit a small amount of data, according to some embodiments.

Moreover, multiple STAs can contend on behalf of other STAs, according to some embodiments. Alternatively, some STAs can contend the channel to help one (or more) user(s) (e.g., other STAs) to boost their traffic, according to some embodiments.

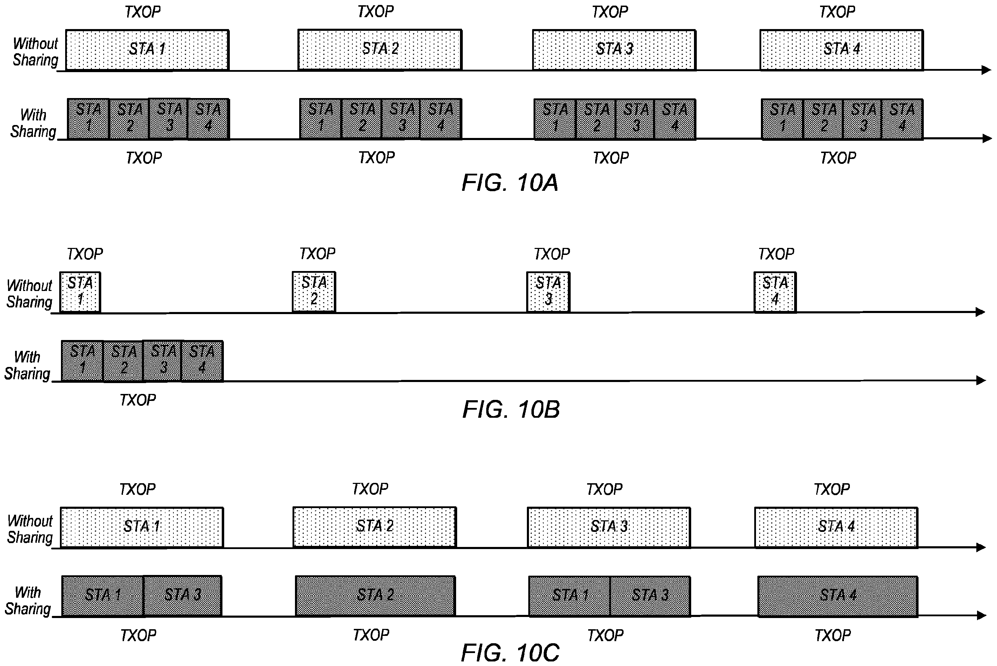

### Figures 10A-C - Transmission Opportunity Sharing

Figures 10A-C illustrate example aspects of Transmission Opportunity (TXOP) sharing, according to some embodiments. For example, while TXOP sharing can possibly not increase the probability of group of STAs accessing the channel, it can be able improve the efficiency of using the channel and sharing it with the group such that the STAs can contend for channel access when they have data to transmit, according to some embodiments.

Figures 10A-C illustrate different examples of TXOP sharing involving four STAs (STAs 1-4). For example, Figure 10A illustrates a full buffer scenario in which if there is no sharing, STAs 1-4 can transmit their data in separate TXOPs and can utilize the full buffer (e.g., entire TXOP). Alternatively, if the STAs are sharing the TXOP, STAs 1-4 can use the medium (e.g., TXOP) in the same way except that resources are redistributed among the group members (e.g., STAs 1-4). In other words, STAs 1-4 can transmit across the full buffer (e.g., TXOP) but by using equal amount of resources distributed for transmission by each STA, according to some embodiments.

Figure 10B illustrates a non-full buffer scenario in which if there is no sharing, the STAs can transmit data separately in different TXOPs and without utilizing the full buffer. Alternatively, if the STAs 1-4 are sharing the TXOP, the STAs 1-4 can use the medium more efficiently where the TXOP is extended to allow for the others to reuse, according to some embodiments.

Alternatively, Figure 10C illustrates a scenario involving mixed TXOP sharing and legacy devices. More specifically, while STAs 1 and 3 can share a common manufacturer, STAs 2 and 4 can be manufactured by a different entity (or entities) other than the manufacturer of STAs 1 and 3, according to some embodiments. For example, if there is no sharing, STAs 1-4 can transmit their data in separate TXOPs and can utilize the full buffer (e.g., entire TXOP). Alternatively, if there is mixed sharing, STAs 1-4 can share the medium by redistributing their resources among others in the same group. For example, STAs 1 and 3 can redistribute their resources to share the TXOP since they can share common capabilities and/or components due to being made by the same manufacturer, according to some embodiments. Furthermore, STA 1 and STA 3 can also be configured differently than those of STA 2 and 4 and they can all be from the same manufacturer, according to some embodiments.

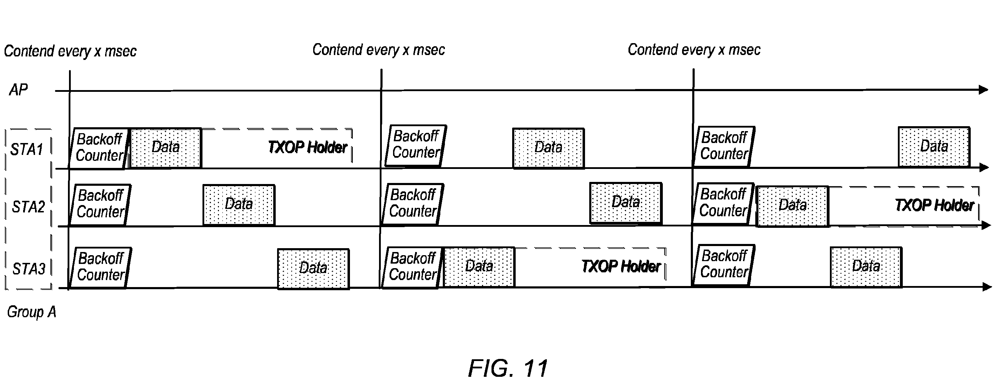

### Figure 11 - Transmission Opportunity Sharing Groups

Figure 11 illustrates example aspects of TXOP sharing groups, according to some embodiments. For example, a TXOP sharing group can be formed by a STA initiating a protocol to discover available groups, according to some embodiments. Accordingly, if an available group is found, the STA can join the group. Alternatively, if a group or available group is not found, the STA can create a new one including itself, according to some embodiments. Once a STA joins a TXOP sharing group, it can receive the group schedule and sharing rules including a cadency and sharing quota (as some examples).

Furthermore, Neighborhood Area Networks (NANs) or any other higher layer application can be used to help with the process or task of joining or creating a TXOP sharing group. Additionally, maintaining, terminating or updating the TXOP sharing group parameters can be facilitated via use of a NAN, according to some embodiments.

In some instances, coordinating channel access can include providing group members with the cadency of accessing the channel and each user sharing said cadency upon joining or upon any updates. In other words, the cadency of channel access can be shared upon joining (NAN) or through an update. In some embodiments, any access beyond this cadency can possibly not be covered by sharing. Accordingly, all group members can start contending for channel access at a scheduled time. Additionally, once the channel is accessed by one of the members, the TXOP can be shared by the TXOP holder between the TXOP sharing group members.

In order to share the TXOP among TXOP sharing group STAs, the TXOP holder can use portion of the TXOP and release the rest to others STAs in the group, according to some embodiments. Additionally, a STA can release resources if the number of resources needed is less than the scheduled resources or if no resources are needed (e.g., the STA has no data to transmit), according to some embodiments.

In some embodiments, STAs in a group can ideally be closely located to see the same state of the channel (e.g., Busy/Ideal). Furthermore, the number of STAs in the group should ideally be balanced due to the fact that increasing the number of STAs in a group increases the probability of accessing the channel but also increases probability of collisions.

In some embodiments, sharing groups can be formed using higher layers formation criteria (devices sharing a same manufacturer ID at the same network). Furthermore, TXOP sharing groups can be formed in an opportunistic manner (e.g., when other users or STAs are welling to coordinate). For example, it can be possible to reuse WiFi - NAN protocol to form groups, according to some embodiments.

For example, Figure 11 illustrates an example of a TXOP sharing group (e.g., Group A) including STAs 1-3 (and possibly more) which are contending for channel access with an AP every "x" seconds (e.g., contending for channel access according to a configured cadence). Furthermore, STA 1 can first gain access to the channel (e.g., win the TXOP). Therefore, STA 1 can become the TXOP beneficiary and therefore can access and utilize the channel to transmit data communications to the AP (or other STAs via P2P communications). Accordingly and after completion of its data transmission, STA 1 can release the rest of the TXOP to STAs 2 and 3 such that they can also perform data transmissions during the TXOP.

Furthermore, after another round of contention, STA 3 can first gain access to the channel (e.g., win the TXOP). Therefore, STA 3 can become the TXOP holder and therefore can access and utilize the channel to transmit data communications to the AP (or other STAs via P2P communications). Accordingly and after completion of its data transmission, STA 3 can release the rest of the TXOP to STAs 1 and 2 such that they can also perform data transmissions during the TXOP. After yet another round of contention, STA 2 can first gain access to the channel and become the TXOP holder. Therefore STA 2 can access and utilize the channel to transmit data communications to the AP (or other STAs via P2P communications). Accordingly and after completion of its data transmission, STA 2 can release the rest of the TXOP to STAs 3 and 1 such that they can also perform data transmissions during the TXOP, according to some embodiments.

Therefore, there can be motivation for STAs to coordinate with other STAs or an AP to gain channel access (against OBSS STAs and non-cooperative STAs), according to some embodiments. For example, devices made by a same (or similar) manufacturer can possibly coordinate with each other to gain lower channel access delays. More specifically, in order to improve channel access delay for devices which share common capabilities and components (e.g., due to sharing a same or similar manufacturer), it can be beneficial for such STAs to form one or more groups to coordinate channel access. Accordingly, when one STA is able to access the channel, the STA (or the AP) can possibly more efficiently coordinate the distribution of TXOP resources with the other STAs in the same group, according to some embodiments.

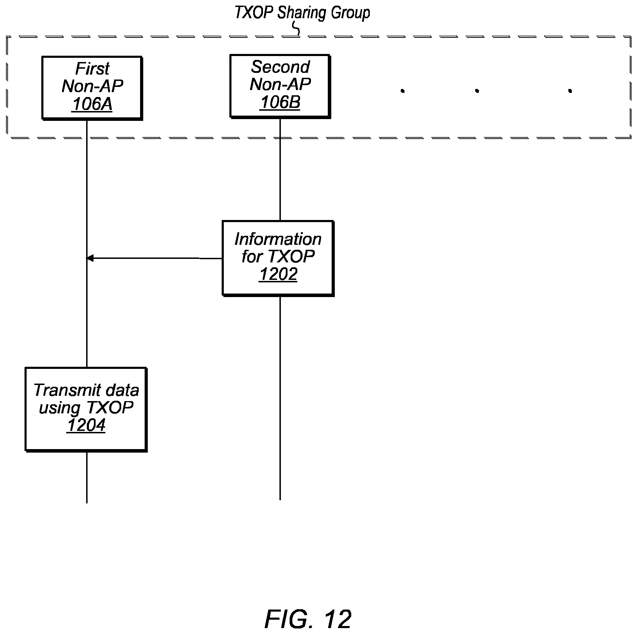

### Figure 12 - Example Method of Enhanced STA Coordinated Channel Access

Figure 12 is a communication flow diagram illustrating an example method of enhanced STA coordinated channel access, according to some embodiments. More specifically, Figure 12 illustrates an embodiment directed toward systems, methods, and mechanisms for non-APs to coordinate with other non-APs for more efficient use of transmission opportunities (TXOPs). Such techniques can aid in providing reduced latency and/or reduced power consumption.

Aspects of the method of Figure 12 can be implemented by a non-AP (or non-AP MLD) in communication with an AP MLD (or non-MLD AP) as well as one or more other non-APs. The AP and/or non-AP can be as illustrated in and described with respect to various ones of the Figures herein, or more generally in conjunction with any of the computer circuitry, systems, devices, elements, or components shown in the above Figures, among others, as desired. For example, a processor (and/or other hardware) of such a device can be configured to cause the device to perform any combination of the illustrated method elements and/or other method elements. For example, one or more processors (or processing elements) (e.g., processor(s) 101, 204, 302, 402, 432, 434, 439, baseband processor(s), processor(s) associated with communication circuitry such as 130, 230, 232, 329, 330, 430, etc., among various possibilities) can cause a wireless device, STA, UE, non-AP, and/or AP, or other device to perform such method elements.

Note that while at least some elements of the method of Figure 12 are described in a manner relating to the use of communication techniques and/or features associated with IEEE and/or 802.11 (e.g., 802.11be) specification documents, such description is not intended to be limiting to the disclosure, and aspects of the method of Figure 12 can be used in any suitable wireless communication system, as desired. Similarly, while elements of the method of Figure 12 are described in a manner relating to non-APs that can possibly not be MLDs, such description is not intended to be limiting to the disclosure, and aspects of the method of Figure 12 can be used by non-APs that are MLDs, as desired.

The methods shown can be used in conjunction with any of the systems, methods, or devices shown in the Figures, among other devices. In various embodiments, some of the method elements shown can be performed concurrently, in a different order than shown, or can be omitted. Additional method elements can also be performed as desired. As shown, this method can operate as follows.

In 1202, a first non-AP 106A can receive information corresponding to a TXOP from a second non-AP, according to some embodiments. More specifically, the first non-AP belonging to a group of at least two non-APs can receive, from a second non-AP of the group of at least two non-APs, signaling including information corresponding to a TXOP. For example, the first and second non-APs (106A and 106B) can be grouped in a TXOP sharing group, according to some embodiments. Accordingly, whichever non-AP in the TXOP sharing group gains access to a channel, said non-AP can be considered the TXOP winner. Furthermore, the TXOP winner can possibly transmit signaling to another non-AP in the TXOP sharing group in order to share the TXOP and make another non-AP of the TXOP sharing group a TXOP beneficiary, according to some embodiments. For example, in 1202, the second non-AP 106B of the TXOP group can be the TXOP winner and can then send information signaling to the first non-AP 106A such that the first non-AP 106A becomes a TXOP beneficiary and can use the TXOP to transmit data to one or more devices.

In some embodiments, the signaling can include information indicating for only the first non-AP to transmit data to the one or more devices using at least a portion of the TXOP. Additionally, if the first non-AP completes transmission of the first data to the one or more devices prior to an end of the TXOP, the first non-AP can transmit, to a group address of the group of at least two non-APs, a clear to send (CTS) message comprising one or more parameters to terminate the TXOP, according to some embodiments.

According to some embodiments, the first non-AP can transmit, to the at least two non-APs, one or more multiple user block acknowledgement requests (MU-BAR) and receive, from the at least two non-APs, one or more block acknowledgements (BAs). Additionally or alternatively, the signaling including information corresponding to a transmission opportunity (TXOP) can be a clear to send (CTS) message including an address of the group of at least two non-APs. Furthermore, the method of Figure 12 can be performed after one or more contention periods have elapsed.

In some embodiments, the signaling can include information indicating for the first non-AP and one or more additional non-APs of the group of at least two non-APs to respectively transmit data to one or more devices using at least a portion of the TXOP. Furthermore, if one of the at least two non-APs completes a respective transmission of data to the one or more devices prior to an end of the TXOP, the first non-AP can further receive, at a group address of the group of at least two non-APs, a clear to send (CTS) message comprising one or more parameters to terminate the TXOP.

In 1204, the first non-AP can transmit data using the TXOP, according to some embodiments. More specifically, the first non-AP can transmit, in accordance with the information corresponding to the TXOP and scheduling information of the group of at least two non-APs, first data to one or more devices, wherein the first data is transmitted to the one or more devices in at least a portion of the TXOP. For example, having received information regarding the TXOP and becoming the TXOP beneficiary in 1202, the first non-AP can proceed to transmit data (e.g., UL data to an AP or P2P data to other non-APs) using the TXOP, according to some embodiments.

According to further embodiments, the group of at least two non-APs can be associated with a group address or group identifier (ID). Additionally or alternatively, the one or more devices can include at least one of one or more APs, one or more mobile APs, one or more non-APs, or one or more non-AP stations (STAs).

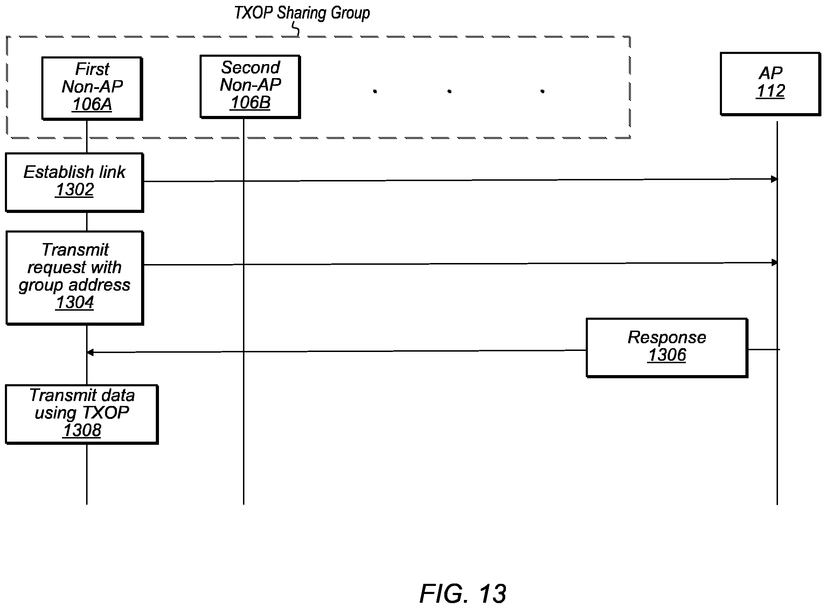

### Figure 13 - Additional Method of Enhanced STA Coordinated Channel Access

Figure 13 is a communication flow diagram illustrating an example method of coordinated channel access by STAs, according to some embodiments. More specifically, Figure 13 illustrates an embodiment directed toward systems, methods, and mechanisms for non-APs to coordinate with other non-APs as well as APs for more efficient use of transmission opportunities (TXOPs). Such techniques can aid in providing reduced latency and/or reduced power consumption.

Aspects of the method of Figure 13 can be implemented by a non-AP (or non-AP MLD) in communication with an AP MLD (or non-MLD AP) and one or more other non-APs. The AP and/or non-AP can be as illustrated in and described with respect to various ones of the Figures herein, or more generally in conjunction with any of the computer circuitry, systems, devices, elements, or components shown in the above Figures, among others, as desired. For example, a processor (and/or other hardware) of such a device can be configured to cause the device to perform any combination of the illustrated method elements and/or other method elements. For example, one or more processors (or processing elements) (e.g., processor(s) 101, 204, 302, 402, 432, 434, 439, baseband processor(s), processor(s) associated with communication circuitry such as 130, 230, 232, 329, 330, 430, etc., among various possibilities) can cause a wireless device, STA, UE, non-AP, and/or AP, or other device to perform such method elements.

Note that while at least some elements of the method of Figure 13 are described in a manner relating to the use of communication techniques and/or features associated with IEEE and/or 802.11 (e.g., 802.11be) specification documents, such description is not intended to be limiting to the disclosure, and aspects of the method of Figure 13 can be used in any suitable wireless communication system, as desired. Similarly, while elements of the method of Figure 13 are described in a manner relating to non-APs that can possibly not be MLDs, such description is not intended to be limiting to the disclosure, and aspects of the method of Figure 13 can be used by non-APs that are MLDs, as desired.

The methods shown can be used in conjunction with any of the systems, methods, or devices shown in the Figures, among other devices. In various embodiments, some of the method elements shown can be performed concurrently, in a different order than shown, or can be omitted. Additional method elements can also be performed as desired. As shown, this method can operate as follows.

In 1302, a first non-AP 106A can establish a link with an AP 112, according to some embodiments. More specifically, at 1302, the first non-AP 106A can establish, via an access channel, a wireless link with the AP 112. For example, the first non-AP 106A in the TXOP sharing group can be the first in the group to gain access to the channel via establishment of the link with the AP 112. Accordingly, the first non-AP 106 can be considered the TXOP winner.

In 1304, the first non-AP 106A can transmit a request with a group address to the AP 112, according to some embodiments. More specifically, at 1304, the first non-AP 106A can transmit, to the AP 112, a request corresponding to TXOP and comprising an address of the group of at least two non-APs. In some embodiments, the request can include an indication for only one of the at least two non-APs to transmit data to the one or more devices using at least a portion of the TXOP. In 1306, the AP 112 can transmit a response to the first non-AP 106A, according to some embodiments. For example, the response can be a clear to send (CTS) message indicating to the first non-AP 106A that it can transmit data.

In 1308, the first non-AP 106A can transmit data using the TXOP, according to some embodiments. More specifically, at 1308, the first non-AP 106A can transmit, in accordance with scheduling information of the group of at least two non-APs, data to one or more devices, wherein the first data is transmitted to the one or more device in at least a portion of the TXOP.

According to some embodiments, if the first non-AP completes transmission of the first data to the one or more devices prior to an end of the TXOP, the first non-AP 106A can broadcast, to a group address of the group of at least two non-APs, one or more invitation to send (ITS) messages. Additionally or alternatively, the first non-AP 106A can receive, from one or more of the at least two non-APs, one or more invitation to transmit (ITS) messages. Furthermore, the one or more ITS messages can indicate to the first non-AP that a non-AP has no data to transmit or that a non-AP has completed transmission of data to the one or more devices prior to an end of a portion of the TXOP.

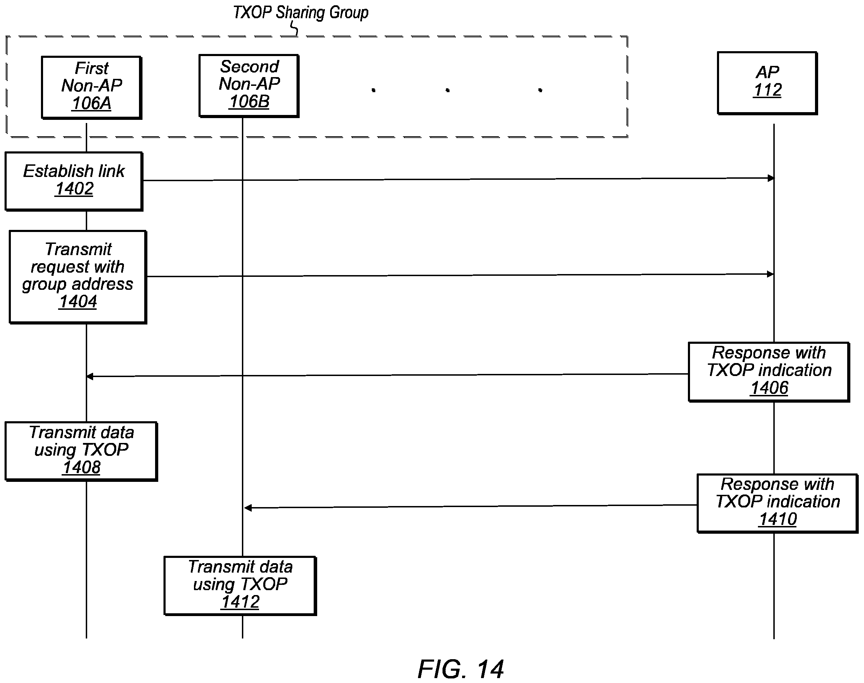

### Figure 14 - Example Method of Enhanced AP Coordinated Channel Access

As previously discussed, channel access delay can be considered as one of the main sources of latency due to STAs competing with other STAs (including APs) in the BSS (as well as OBSS) to gain channel access, according to some embodiments.

However, most low latency UL applications can possibly not have high data rate requirements for each channel access. Therefore, it can be beneficial for APs to help coordinate sharing of one TXOP among multiple APs or STAs in the time and frequency domains to support low latency applications. For example, while STAs can possibly coordinate with each other to gain channel access (against OBSS STAs and non-cooperative STAs), APs can possibly help with or enhance this coordination to better or more efficiently and flexibly distribute resources among a group of devices. For example, if STAs form a group to coordinate channel access, once a STA of the group accesses the channel it can use the AP to help trigger the other members of the group. Accordingly, such enhanced coordination can improve channel access delay for P2P or UL devices.

For example, the AP can possibly help coordinate the TXOP sharing among the STAs in a group as APs can be already expected to implement TXOP sharing among other APs. Accordingly, tools can be already available to be reused for triggered TXOP sharing (e.g., TXS). Accordingly, STAs interested in sharing their TXOP for a group can possibly indicate said interest with a group address, according to some embodiments. Accordingly, any STA in the group list accessing the channel can share the TXOP with the AP. The AP can then manage sharing the TXOP among the STAs in the group. In some instances, the AP can only share the TXOP with a predefined group of STAs in the TXOP sharing group, according to some embodiments. For example, the AP can manage the sharing of the TXOP among the group of stays similarly to or via use of a Reverse Direction Multiple User- Multiple Input Multiple Output (RD UL MU-MIMO) with a predefined schedule in time or frequency, according to some embodiments. Furthermore, STAs can have a use case where multiple STAs need to access the channel using the same cadence (Live P2P conversation, visual audio, etc.), according to some embodiments. Accordingly, by the STAs sharing the TXOP with the AP, the AP can possibly better coordinate the channel access without putting power constraints on the STAs.

Figure 14 is a communication flow diagram illustrating an example method of enhanced AP coordinated channel access, according to some embodiments. More specifically, Figure 14 illustrates an embodiment directed toward systems, methods, and mechanisms for APs to coordinate with non-APs for more efficient use of transmission opportunities (TXOPs). Such techniques can aid in providing reduced latency and/or reduced power consumption.

Aspects of the method of Figure 14 can be implemented by an AP (or AP MLD) in communication with one or more non-APs (or MLD non-APs). The AP and/or non-AP can be as illustrated in and described with respect to various ones of the Figures herein, or more generally in conjunction with any of the computer circuitry, systems, devices, elements, or components shown in the above Figures, among others, as desired. For example, a processor (and/or other hardware) of such a device can be configured to cause the device to perform any combination of the illustrated method elements and/or other method elements. For example, one or more processors (or processing elements) (e.g., processor(s) 101, 204, 302, 402, 432, 434, 439, baseband processor(s), processor(s) associated with communication circuitry such as 130, 230, 232, 329, 330, 430, etc., among various possibilities) can cause a wireless device, STA, UE, non-AP, and/or AP, or other device to perform such method elements.

Note that while at least some elements of the method of Figure 14 are described in a manner relating to the use of communication techniques and/or features associated with IEEE and/or 802.11 (e.g., 802.11be) specification documents, such description is not intended to be limiting to the disclosure, and aspects of the method of Figure 14 can be used in any suitable wireless communication system, as desired. Similarly, while elements of the method of Figure 14 are described in a manner relating to non-APs that can possibly not be MLDs, such description is not intended to be limiting to the disclosure, and aspects of the method of Figure 14 can be used by non-APs that are MLDs, as desired.

The methods shown can be used in conjunction with any of the systems, methods, or devices shown in the Figures, among other devices. In various embodiments, some of the method elements shown can be performed concurrently, in a different order than shown, or can be omitted. Additional method elements can also be performed as desired. As shown, this method can operate as follows.

In 1402, a first non-AP 106A can establish a link with an AP 112, according to some embodiments. More specifically, at 1402, the first non-AP 106A can establish, via an access channel, a wireless link with the AP 112. For example, the first non-AP 106A in the TXOP sharing group can be the first in the group to gain access to the channel via establishment of the link with the AP 112. Accordingly, the first non-AP 106 can be considered the TXOP winner.

In 1404, the first non-AP 106A can transmit a request with a group address to the AP 112, according to some embodiments. More specifically, at 1404, the first non-AP 106A can transmit, to the AP 112, a request corresponding to TXOP and comprising an address of the group of at least two non-APs. In some embodiments, the request can include an indication for only one of the at least two non-APs to transmit data to the one or more devices using at least a portion of the TXOP. In 1306, the AP 112 can transmit a response to the first non-AP 106A, according to some embodiments. For example, the response can be a clear to send (CTS) message indicating to the first non-AP 106A that it can transmit data.

In 1406, the AP 112 can transmit a response to the first non-AP 106A, according to some embodiments. More specifically, at 1406, the AP 112 can transmit a response comprising a TXOP sharing indication to the first non-AP 106A.

In 1408, the first non-AP 106A can transmit data using the TXOP, according to some embodiments. More specifically, at 1408, the first non-AP 106A can transmit, in accordance with scheduling information of the group of at least two non-APs, data to one or more devices, wherein the data is transmitted to the one or more device in at least a portion of the TXOP.

In 1410, the non-AP can the AP 112 can transmit a response to the second non-AP 106B, according to some embodiments. More specifically, at 1410, the AP 112 can transmit an additional response comprising a TXOP sharing indication to the second non-AP 106B.

Accordingly, at 1412, the second non-AP 106B can transmit data using the TXOP, according to some embodiments. More specifically, at 1412, the second non-AP 106B can transmit, in accordance with scheduling information of the group of at least two non-APs, data to one or more devices, wherein the data is transmitted to the one or more device in at least a portion of the TXOP.

According to some embodiments, the AP 112 can transmit, to one or more non-APs of the group of at least two non-APs, one or more null data packet feedback report polls (NFRPs). Additionally or alternatively, the AP 112 can transmit, to one or more non-APs of the group of at least two non-APs, one or more request to send (RTS) messages, wherein durations of the RTS messages are maximum allowed sharing durations.

In some embodiments, the AP 112 can receive, from one or more non-APs of the group of at least two non-APs, one or more clear to send (CTS) messages, wherein durations of the CTS messages indicate requested durations less than or equal to the maximum allowed sharing durations. Additionally or alternatively, the AP 112 can perform, in response to one or more non-APs of the group of at least two non-APs completing a transmission before an assigned time, a point coordination function interframe space (PIFS) recovery of the access channel

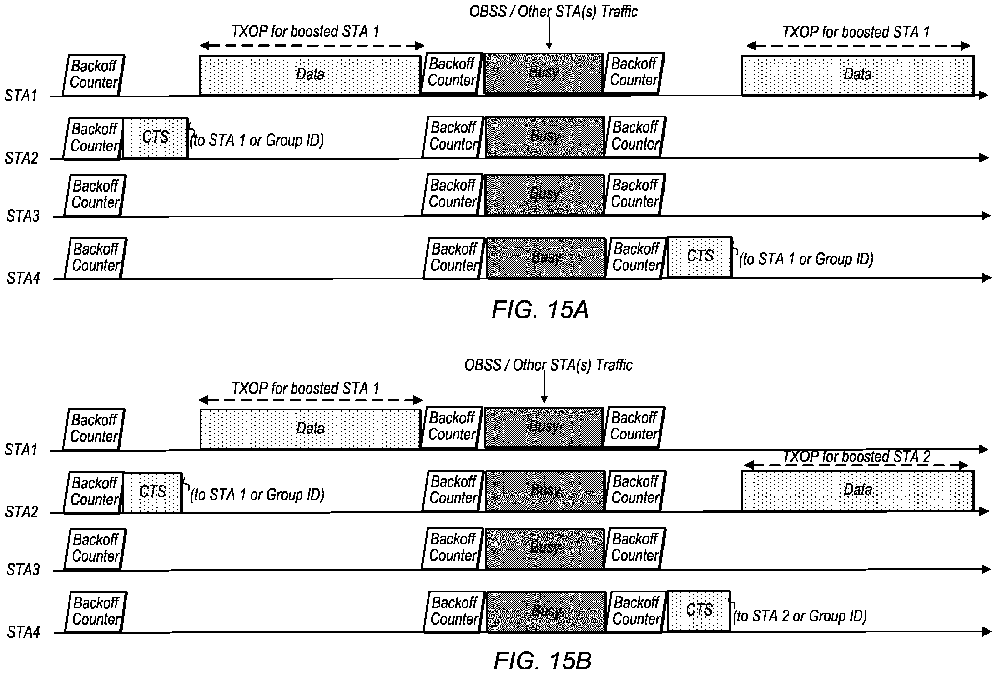

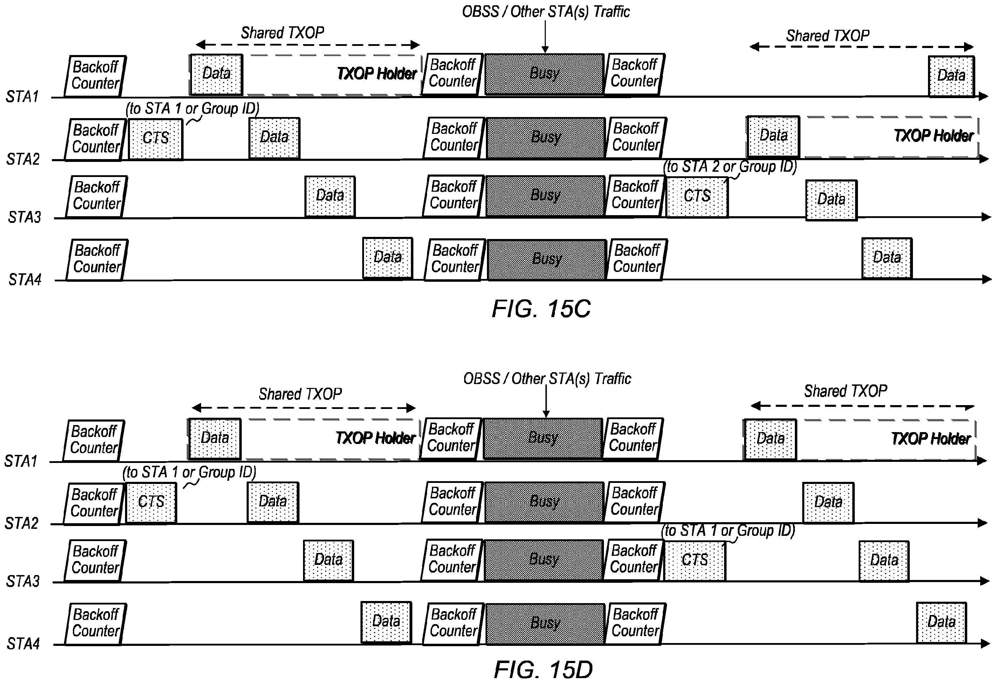

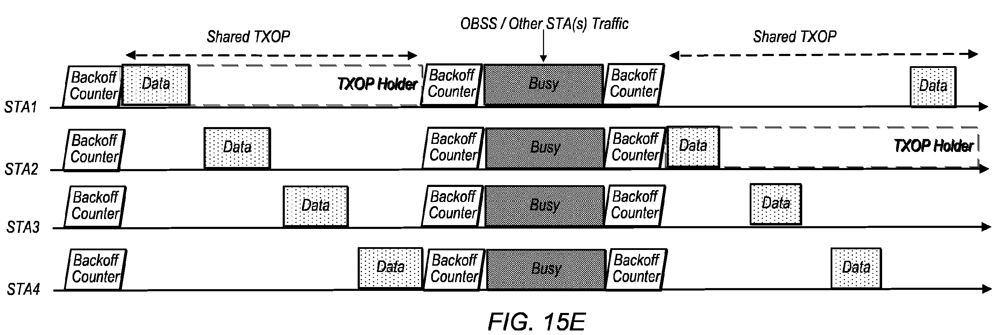

### Figures 15-24 - Example Aspects of STA Coordinated Channel Access

The methods of Figures 12-13 can further correspond to the examples scenarios shown in Figures 15-24, according to some embodiments. For example, Figures 15A-E illustrate examples of TXOP sharing scenario between four STAs (e.g., without further coordination assistance from an AP) in which there is can be no need for a dedicated coordinator (e.g., one of the four STAs) to remain awake, according to some embodiments. Accordingly, these scenarios and STA coordination thereof can possibly not only reduce complexity of TXOP sharing but further provide power conservation of the STAs by not needing one of the STAs to remain awake constantly.

More specifically, Figure 15A illustrates an example scenario in which one of the four STAs (e.g., STA 1) is boosted by the other STAs in the group (e.g., STAs 2-4), according to some embodiments. For example, after the backoff timers (which can specify a random time interval before reattempting to access the channel), one of the STAs in the group can gain access to the channel. Accordingly, the STA that first gains access to the channel (e.g., STA 2) can transmit a message such as a clear to send (CTS) message using a receiving (RX) address as the STA to be boosted (e.g., STA 1) or the group ID (e.g., the identifier of the group containing STAs 1-4) or any other new control frame carrying the same information. Accordingly, STA 1 can benefit from being boosted and take advantage of the full TXOP by transmitting data to the AP via uplink (UL) transmissions or alternatively communicating with other STAs via peer-to-peer (P2P) communications, according to some embodiments. Furthermore, after STA 1 completes its transmissions in the TXOP, the STAs in the group can once again utilize their backoff timers before reattempting to access the channel. For example, the STAs in the channel can be considered busy (e.g., inaccessible) due to traffic from overlapping basic service sets (OBSS) or other STAs (e.g., outside the group) in the channel. However, once the channel becomes accessible again, the STAs in the group can once again attempt to access the channel after their backoff timers have expired. For example, a different STA in the group can be granted access to the channel (e.g., STA 4) in a second channel access attempt from the group. Accordingly, STA 4 can also boost STA 1 by transmitting a CTS or a new control frame such that STA 1 can access the channel and transmit communications (e.g., UL or P2P) during the TXOP. In other words, Figure 15A illustrates an example scenario in which STAs in a group can, via sending a frame indicating that the STA should access the channel, boost one STA such that the boosted STA gains access to the channel and is able to utilize the TXOP to perform communications, according to some embodiments.

Similar to Figure 15A, Figure 15B illustrates an alternative scenario in which the STAs in the group (e.g., STAs 1-4) can have a predefined or assigned schedule to alternate the TXOP beneficiary to be boosted, according to some embodiments. For example, the STA that first gains access to the channel (e.g., STA 2) can be considered as the TXOP winner and transmit a message such as a clear to send clear to send (CTS) message using a receiving (RX) address as the STA to be boosted (e.g., STA 1) or the group ID (e.g., the identifier of the group containing STAs 1-4) or any other new control frame carrying the same information. Accordingly, STA 1 can be characterized as the TXOP beneficiary and further benefit from being boosted to take advantage of the full TXOP to transmit data. However, upon a second channel access attempt (after busy periods due to OBSS/other STA traffic and expiry of backoff timers), a different STA in the group can be granted access to the channel (e.g., STA 4). Accordingly, STA 4 can boost a STA that was previously not boosted (e.g., STA 2) by transmitting a CTS or a new control frame such that STA 2 can access the channel and transmit communications (e.g., UL or P2P) during the TXOP. In other words, Figure 15B illustrates a mechanism for alternating which STA is boosted (e.g., granted access to the channel to transmit during the TXOP), according to some embodiments. Accordingly, Figures 15A-B illustrate example mechanisms for boosting channel access without sharing overhead and complication.

Figure 15C illustrates an example scenario in which STAs in a group can have a predefined or assigned schedule to alternate the first TXOP STA to use the channel (e.g., utilize part of the shared TXOP) and then share the remaining duration of the TXOP with the other STAs in the group. For example, in Figure 15C, STA 2 can gain access to the channel after expiry of the backoff timers and, according to the predefined or assigned schedule, transmit a CTS or new control frame such that STA 1 can access the channel and utilize a portion of the shared TXOP to perform UL or P2P transmissions. Accordingly and after receiving the CTS from STA 2 (e.g., the STA that originally gained access to the channel - the TXOP winner), STA 1 can be considered to be the TXOP beneficiary and/or TXOP holder of the shared TXOP, according to some embodiments. Furthermore, once the TXOP holder (e.g., STA 1) has completed its transmissions in the shared TXOP, the remaining STAs in the group (e.g., STAs 2-4) can then sequentially (STA 2, STA 3, and then STA 4) transmit their UL or P2P communications in the remaining duration of the TXOP. Additionally, in a second channel access attempt (after busy periods due to OBSS/other STA traffic and expiry of backoff timers), a different STA in the group can be granted access to the channel (e.g., STA 3) and transmit a CTS or a new control frame to reassign the TXOP the TXOP holder (e.g., STA 2). Accordingly, STA 2 can proceed to perform UL or P2P communications during a portion of the TXOP and then share the remaining duration of the shared TXOP with the other STAs in the group. For example, STA 3, STA 4, and STA 1 can then respectively transmit their UL/P2P signaling during respective remaining portions of the shared TXOP. In other words, the TXOP winner (e.g., STA to first gain access to the channel) can decide or determine which STA to share the channel with (e.g., which STA to make the TXOP holder). Accordingly the TXOP holder can perform its UL/P2P communications first and then the other STAs can respectively get their turn to utilize portions of the TXOP for their UL/P2P communications.

Figure 15D illustrates a similar scenario to that of Figure 15C but in which the STAs can have a predefined assigned schedule to always give TXOP access to a specific STA to first use the channel and then share it with the other STAs. For example, in Figure 15D, STA 2 can gain access to the channel after expiry of the backoff timers and, according to the predefined or assigned schedule, transmit a CTS or new control frame such that STA 1 can access the channel and utilize a portion of the shared TXOP to perform UL or P2P transmissions. Accordingly and after receiving the CTS from STA 2 (e.g., the STA that originally gained access to the channel - the TXOP winner), STA 1 can be considered to be the TXOP beneficiary and/or TXOP holder of the shared TXOP, according to some embodiments. Furthermore, once the TXOP holder (e.g., STA 1) has completed its transmissions in the shared TXOP, the remaining STAs in the group (e.g., STAs 2-4) can then sequentially (STA 2, STA 3, and then STA 4) transmit their UL or P2P communications in the remaining duration of the TXOP. However, in a second channel access attempt (after busy periods due to OBSS/other STA traffic and expiry of backoff timers), a different STA in the group can be granted access to the channel (e.g., STA 3) and transmit, according to the predefined or assigned schedule, a CTS or a new control frame to reassign the TXOP holder once again (e.g., to STA 1). Accordingly, STA 1 can proceed to perform UL or P2P communications during a portion of the TXOP and then share the remaining duration of the shared TXOP with the other STAs in the group. For example, STA 2, STA 3, and STA 4 can then respectively transmit their UL/P2P signaling during respective remaining portions of the shared TXOP. In other words, the TXOP winner (e.g., STA to first gain access to the channel) can be configured to always share the channel with a particular STA such that one STA is always the TXOP holder (e.g., TXOP beneficiary). More specifically, the STAs in the group can include one dedicated STA which can act as a dedicated helper to facilitate the TXOP sharing, according to some embodiments.

Figure 15E illustrates a similar scenario to that of Figures 15C-D but in which the STAs can be configured such that whichever STA gains access to the channel first (e.g., the TXOP winner), this STA utilizes the TXOP first and then shares it with the other STAs, according to some embodiments. For example, in Figure 15E, STA 1 can gain access to the channel after expiry of the backoff timers and, as the TXOP holder, utilize a portion of the shared TXOP to perform UL or P2P transmissions. Accordingly once the TXOP holder (e.g., STA 1) has completed its transmissions in the shared TXOP, the remaining STAs in the group (e.g., STAs 2-4) can then sequentially (STA 2, STA 3, and then STA 4 as one example) transmit their UL or P2P communications in the remaining duration of the TXOP. However, in a second channel access attempt (after busy periods due to OBSS/other STA traffic and expiry of backoff timers), a different STA in the group (e.g., STA 2) can be granted first access to the channel and transmit, as the new TXOP winner and subsequently the TXOP holder, UL or P2P communications during a first portion of the TXOP. Accordingly, STA 2 can then share the remaining duration of the shared TXOP with the other STAs in the group. For example, STA 3, STA 4, and STA 1 can then respectively transmit their UL/P2P signaling during respective remaining portions of the shared TXOP. In other words, the TXOP winner (e.g., STA to first gain access to the channel) can be configured to always be the TXOP holder, according to some embodiments. More specifically, the STA in the group that wins the TXOP (e.g., first gains access to the channel) can act as a dedicated helper to facilitate the TXOP sharing, according to some embodiments. In other words, while the STAs can contend for channel access, once a STA accesses the channel, it can use the TXOP position allocated to it and share it the rest with the rest of the STAs in the coordinated group according to predefined ratios, according to some embodiments.

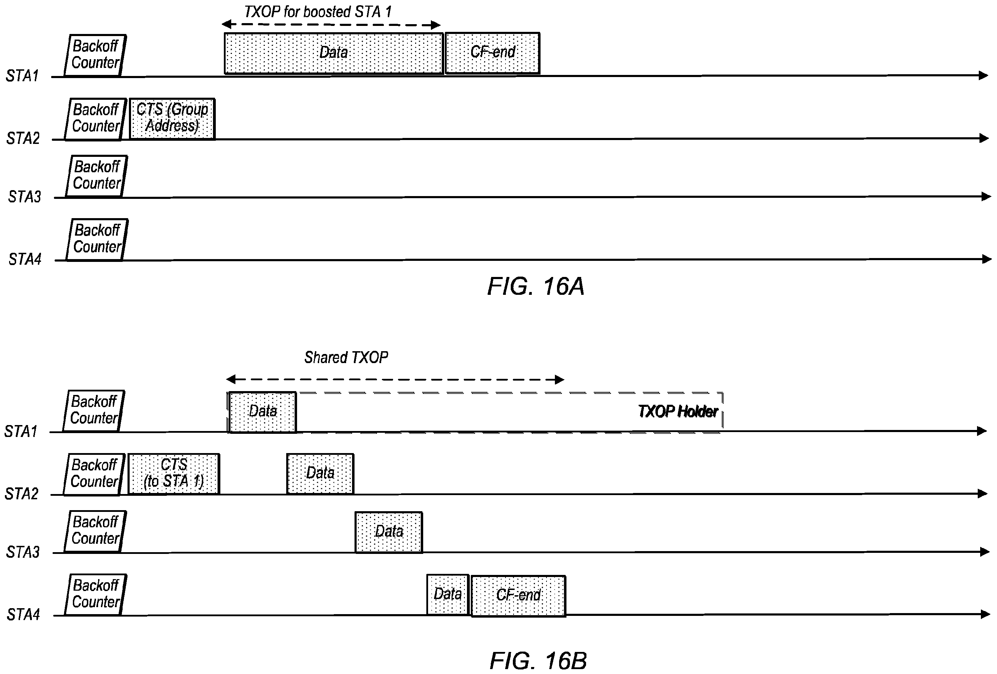

Furthermore, Figures 16A-B illustrate example scenarios of shared TXOP termination, according to some embodiments. For example, when a STA shares the TXOP among multiple STAs, there can be instances in which a STA finishes transmitting early during its portion of the TXOP. Accordingly, the STA that completes its transmission early can deliver the rest of the TXOP to the STA scheduled after it or alternatively keep transmitting until the end of its allocated period, according to some embodiments. In other words, a boosted STA (e.g., TXOP beneficiary) might end the TXOP early or the last STA of a TXOP sharing STA might end the TXOP early, according to some embodiments. Accordingly, in order for STAs that might not be the TXOP holder to possibly be able to terminate the TXOP, request to transmit (RTS) and CTS messages for TXOP reservation should use a group address associated with the group of STAs. Therefore, any STA in a group can possibly initiate or terminate the shared TXOP using said RTS or CTS with group addresses, according to some embodiments.

For example, Figure 16A illustrates the STA that first gains access to the channel (e.g., STA 2) can transmit a CTS message to a group address (e.g., associated with a group ID containing STAs 1-4) to the STA to be boosted (e.g., STA 1). Accordingly, STA 1 can benefit from being boosted and take advantage of the TXOP by transmitting UL data to an AP or P2P communications with another STA, according to some embodiments. Furthermore, if STA 1 completes its transmissions in the TXOP prior to the end of the TXOP duration, STA 1 can terminate the TXOP early by transmitting a CTS (or alternatively, a contention free - end (CF-end frame)) to the group address including an indication that the TXOP has been terminated. For example, the CTS can include indications such as a network allocation vector (NAV) value set to zero (e.g., NAV = 0). For example, CF-end can indicate the end of a contention-free period and/or NAV=0 can represent the number of microseconds that the sending STA intends to hold the medium busy (e.g., 0 microseconds), according to some embodiments.

Alternatively, Figure 16B illustrates the STA that first gains access to the channel (e.g., STA 2) can transmit a CTS message to a group address (e.g., associated with a group ID containing STAs 1-4) to STA1 to share the TXOP and make STA 1 the TXOP holder. Accordingly, STA 1 can transmit UL/P2P communications and then share the remaining duration of the TXOP with the other STAs in the group (e.g., STAs 2-4). Accordingly, STAs 2, 3, and 4 can proceed with their respective UL/P2P communications in the TXOP. However, in some instances, the last STA (e.g., STA 4) can complete its UL/P2P signaling prior to the end of the TXOP duration and subsequently terminate the TXOP early. Accordingly, STA 4 can terminate the TXOP early by transmitting a CTS to the group address including an indication that the TXOP has been terminated (e.g., including NAV = 0 or alternatively by transmitting a CF-end frame), according to some embodiments.

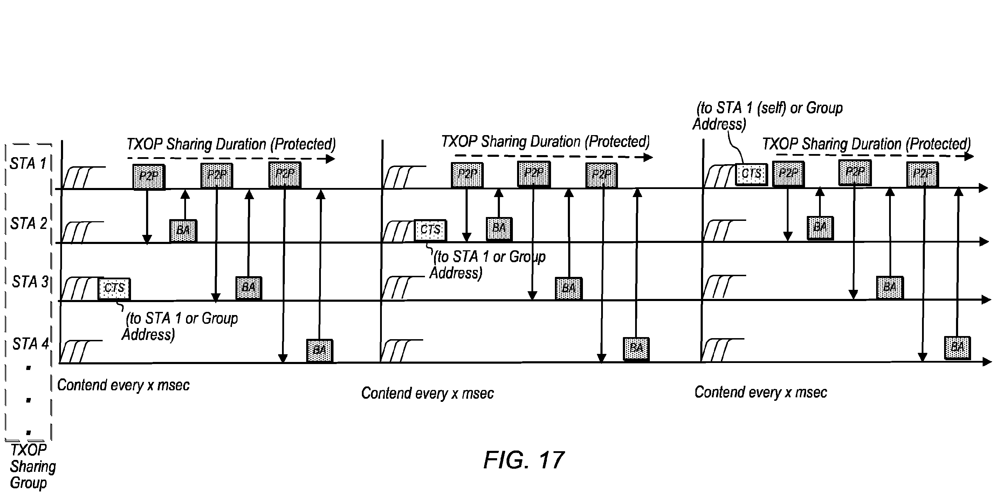

Additionally, Figure 17 illustrates an example of boosting channel access, according to some embodiments. More specifically, Figure 17 illustrates an example of a coordinating group boosting a STA to access to the channel such that the STA can transmit P2P traffic to one or more STAs in or outside the coordinating group in unicast transmission(s), according to some embodiments. For example, once one of the STAs in the TXOP sharing group gains access to the channel, it can boost a STA in the group such that one of the STAs is the beneficiary of the TXOP, according to some embodiments. In other words, STAs in the coordinating group can contend for channel access and once any of the STAs accesses the channel (e.g., the TXOP winner) it can give access to the TXOP to the STA 1 (e.g., the TXOP beneficiary) For example, the TXOP winner can send a frame to reserve the channel and allow the TXOP beneficiary to use the channel. In some embodiments, this frame can be a CTS message or signal addressed to the TXOP winner or utilize/include the destination address (DA) to the coordinating group address. Accordingly, if the group address is used for the CTS destination, it can be preconfigured during the group formation to specify which STA should use the channel among the group members upon receiving the CTS to group address frame. Accordingly, the STA which becomes the TXOP beneficiary can start transmitting data after receiving the CTS, according to some embodiments. In some embodiments, STA 1 can be a mobile AP or a non-AP STA.

For example, Figure 17 illustrates a TXOP sharing group including STAs 1-4 (and possibly more) which are contending for channel access every "x" seconds (e.g., contending for channel access according to a configured cadence). Furthermore, STA 3 can first gain access to the channel (e.g., win the TXOP) and transmit a CTS to STA 1 (or alternatively to the group address). Accordingly, STA 1 can become the TXOP beneficiary and therefore can access and utilize the channel to transmit P2P communications to other STAs in the coordinating group. For example, during the TXOP sharing duration in which the TXOP is protected, STA 1 can transmit P2P communications to STAs 2-4 (as well as additional STAs in the TXOP sharing group) and receive respective block acknowledgements (BAs) from the respective STAs.

Furthermore, after another round of contention, STA 2 can first gain access to the channel (e.g., win the TXOP) and transmit a CTS to STA 1 (or alternatively to the group address). Accordingly, STA 1 can once again become the TXOP beneficiary and therefore can access and utilize the channel to transmit P2P communications to other STAs in the coordinating group (e.g., TXOP sharing group) and receive respective BAs from the respective STAs. Similarly, after yet another round of contention to access the channel, STA 1 can first gain access to the channel and subsequently transmit P2P communications to other STAs in the TXOP sharing group and receive respective BAs from the respective STAs, according to some embodiments.

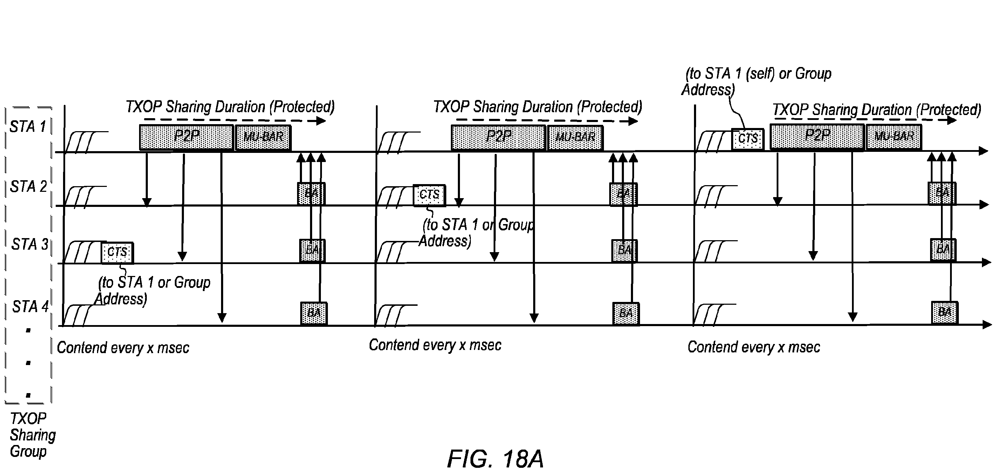

Figures 18A-E illustrate additional examples of boosting channel access, according to some embodiments. For example, Figure 18A illustrates an example scenario in which a coordinating group boosts STA 1 access to the channel. Accordingly, STA 1 can transmit P2P traffic (e.g., data) to one or more STAs in or outside the coordinating group in broadcast transmission(s) or multi-user (MU) transmission(s). More specifically, Figure 18A illustrates a TXOP sharing group including STAs 1-4 (and possibly additional STAs) which are contending for channel access every "x" seconds according to a configured cadence. Furthermore, STA 3 can first win the TXOP (e.g., gain access to the channel) and transmit a CTS to STA 1 (or alternatively to the group address). Accordingly, STA 1 can become the TXOP beneficiary and therefore can access and utilize the channel to transmit P2P communications to other STAs in the coordinating group. For example, during the TXOP sharing duration in which the TXOP is protected, STA 1 can transmit P2P communications to STAs 2-4 (as well as additional STAs in the TXOP sharing group). Furthermore, as part of or in addition to the P2P communications, STA 1 can transmit a multi-user block acknowledgement request (MU-BAR) such that STAs 2-4 respond to STA 1 with respective BAs at the same time.

Furthermore, after another round of contention, STA 2 can first gain access to the channel (e.g., win the TXOP) and transmit a CTS to STA 1 (or alternatively to the group address). Accordingly, STA 1 can once again become the TXOP beneficiary and transmit P2P communications (along with one or more MU-BARs) to other STAs in the coordinating group and receive respective BAs from the respective STAs at the same time. Similarly, after yet another round of contention to access the channel, STA 1 can first gain access to the channel and subsequently transmit P2P communications (along with one or more MU-BARs) to other STAs in the coordinating group and receive respective BAs from the respective STAs at the same time, according to some embodiments.

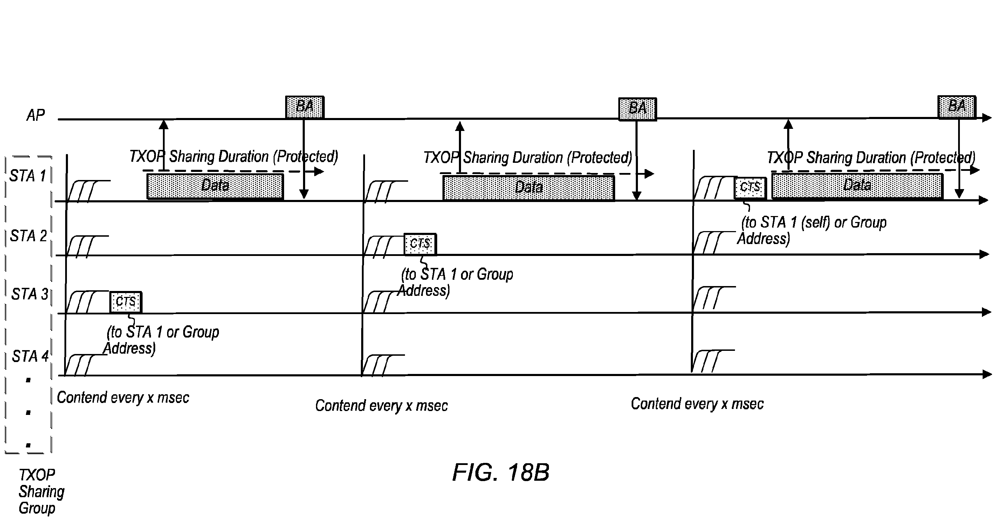

Alternatively, Figure 18B illustrates an example scenario in which a coordinating group boosts a STA for access to the channel and the STA transmits UL traffic to an AP after gaining access to the channel, according to some embodiments. More specifically, Figure 18B illustrates a TXOP sharing group including STAs 1-4 (and possibly additional STAs) which are contending for channel access every "x" seconds according to a configured cadence. Furthermore, STA 3 can first win the TXOP (e.g., gain access to the channel) and transmit a CTS to STA 1 (or alternatively to the group address). Accordingly, STA 1 can become the TXOP beneficiary and therefore can access and utilize the channel to transmit UL communications to an AP. For example, during the TXOP sharing duration in which the TXOP is protected, STA 1 can transmit UL data to the AP and subsequently receive a BA from the AP.

Furthermore, after another round of contention, STA 2 can first gain access to the channel (e.g., win the TXOP) and transmit a CTS to STA 1 (or alternatively to the group address). Accordingly, STA 1 can once again become the TXOP beneficiary and transmit UL data to the AP and receive another BA from the AP. Similarly, after yet another round of contention to access the channel, STA 1 can first gain access to the channel and subsequently transmit additional UL data to other the AP and receive another BA from the AP, according to some embodiments.

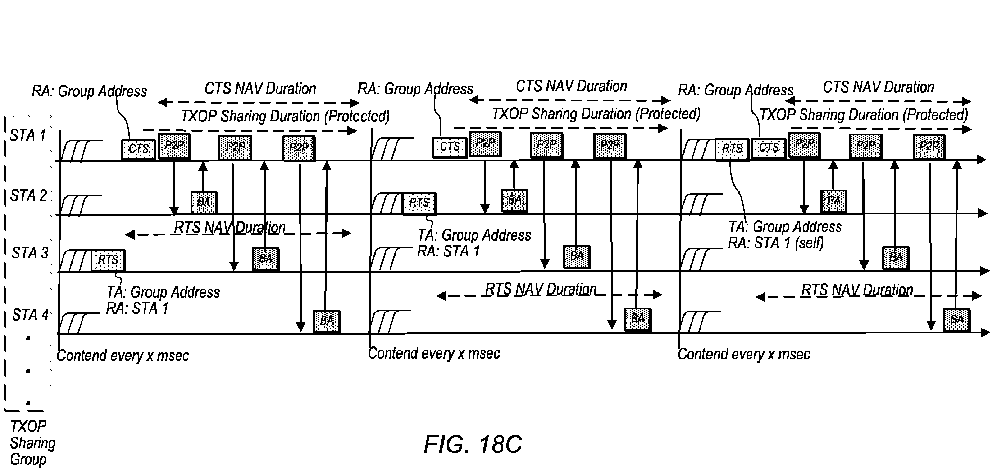

Figure 18C illustrates an example scenario for STA coordinated channel access for TXOP sharing groups of STAs, according to some embodiments. For example, Figure 18C illustrates a TXOP sharing group including STAs 1-4 (and possibly more) which are contending for channel access every "x" seconds (e.g., contending for channel access according to a configured cadence and as indicated by the three converging lines on each STA). Furthermore, STA 3 can first gain access to the channel (e.g., win the TXOP) and transmit a RTS to STA 1 in which the TA is group address and the RA is STA1. Furthermore, the RTS can include an indication of a RTS NAV duration, according to some embodiments. For example, the RTS NAV duration can correspond to a duration extending from the end of the RTS to the end of an TXOP Sharing duration, according to some embodiments. Accordingly, STA 1 can become the TXOP beneficiary and therefore can access and utilize the channel to transmit a CTS to the group (e.g., RA = Group Address) and further transmit P2P communications to other STAs in the coordinating group. For example, during the TXOP sharing duration in which the TXOP is protected, STA 1 can transmit P2P communications to STAs 2-4 (as well as additional STAs in the TXOP sharing group) and receive respective block acknowledgements (BAs) from the respective STAs.

Furthermore, after another round of contention, STA 2 can first gain access to the channel (e.g., win the TXOP) and transmit a RTS to STA 1 including a TA as the group address, the RA as STA1, and furthermore can an indication of a RTS NAV duration, according to some embodiments. Accordingly, STA 1 can once again become the TXOP beneficiary and therefore can access and utilize the channel to transmit another CTS with the group address as the RA as well as additional P2P communications to other STAs in the TXOP sharing group (during the TXOP sharing duration in which the TXOP is protected (e.g., the CTS NAV duration)). Accordingly, STA 1 can receive respective BAs from the respective STAs. Similarly, after yet another round of contention to access the channel, STA 1 can first gain access to the channel and subsequently transmit an RTS (including a TA as the group address and the RA as STA1 (itself)) and a CTS with the group address as the RA and P2P communications to other STAs in the TXOP sharing group (during the TXOP sharing duration in which the TXOP is protected (e.g., the CTS NAV duration) and receive respective BAs from the respective STAs, according to some embodiments. In other words, Figure 18C is directed toward a mechanism in which the TXOP beneficiary determines a TXOP duration (which can be less than or equal to a RTS NAV duration) to reserve the medium (e.g., channel) based on its traffic needs, according to some embodiments.

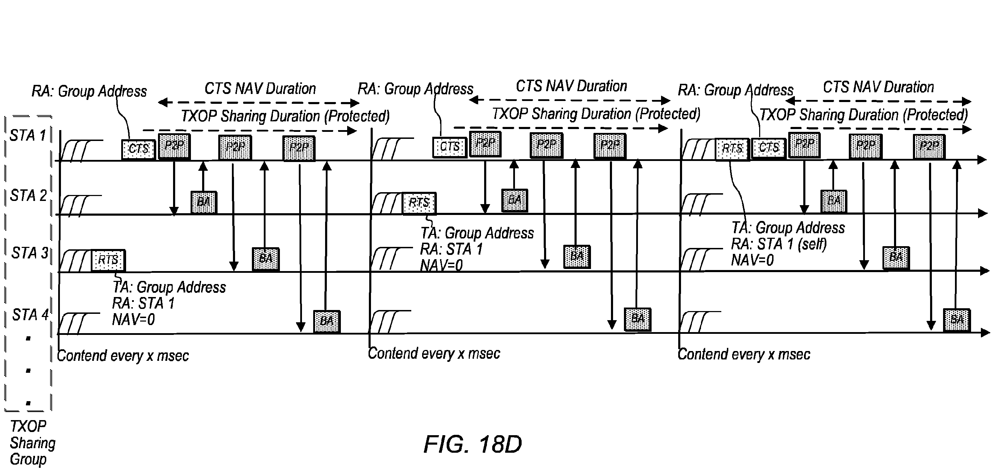

Figure 18D illustrates an example scenario for STA coordinated channel access for TXOP sharing groups of STAs, according to some embodiments. For example,

Figure 18D illustrates a TXOP sharing group including STAs 1-4 (and possibly more) which are contending for channel access every "x" seconds (e.g., contending for channel access according to a configured cadence). Furthermore, STA 3 can first gain access to the channel (e.g., win the TXOP) and transmit a RTS to STA 1 in which the TA is group address, the RA is STA1. Additionally, the RTS can include an indication of NAV=0, according to some embodiments. Accordingly, STA 1 can become the TXOP beneficiary and therefore can access and utilize the channel to transmit a CTS to the group (e.g., RA = Group Address) and further transmit P2P communications to other STAs in the coordinating group. For example, during the TXOP sharing duration in which the TXOP is protected (e.g., shown also as the CTS NAV duration), STA 1 can transmit P2P communications to STAs 2-4 (as well as additional STAs in the TXOP sharing group) and receive respective block acknowledgements (BAs) from the respective STAs.

Furthermore, after another round of contention, STA 2 can first gain access to the channel (e.g., win the TXOP) and transmit a RTS to STA 1 including a TA as the group address, the RA as STA1, and NAV=0, according to some embodiments. Accordingly, STA 1 can once again become the TXOP beneficiary and therefore can access and utilize the channel to transmit another CTS with the group address as the RA as well as additional P2P communications to other STAs in the TXOP sharing group (during the TXOP sharing duration in which the TXOP is protected (e.g., the CTS NAV duration)). Accordingly, STA 1 can receive respective BAs from the respective STAs. Similarly, after yet another round of contention to access the channel, STA 1 can first gain access to the channel and subsequently transmit an RTS (including a TA as the group address, the RA as STA1 (itself), and NAV=0) and a CTS with the group address as the RA and P2P communications to other STAs in the TXOP sharing group (during the TXOP sharing duration in which the TXOP is protected (e.g., the CTS NAV duration) and receive respective BAs from the respective STAs, according to some embodiments.

In other words, Figure 18D is directed toward a mechanism in which the TXOP beneficiary sends a CTS TXOP to reserve the medium (e.g., channel) with the exact TXOP duration based on its traffic needs. Accordingly, the RA of the CTS can be the group address and in the case of no traffic at STA 1, the CTS duration can be set such that the NAV=0 or the CTS duration can be set to be long enough to send a CF-end, according to some embodiments.

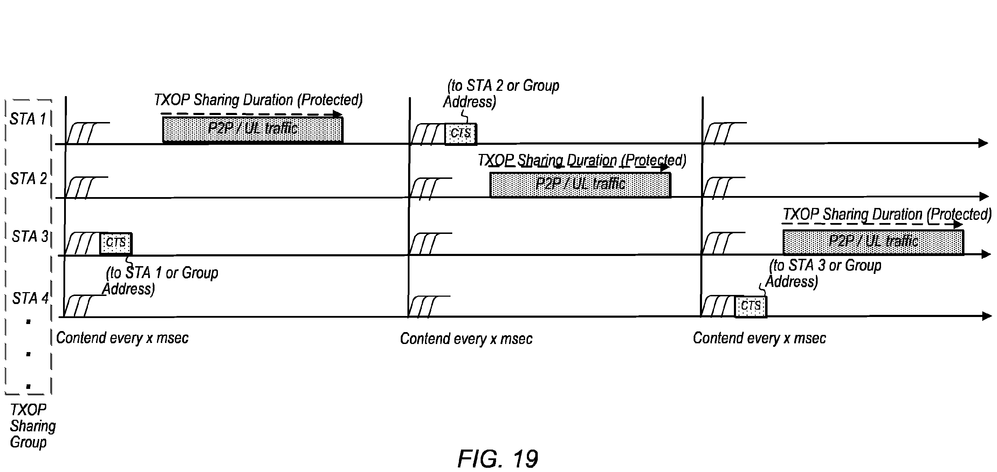

Figure 19 illustrates an example scenario in which when one of the STAs in a coordinating group accesses the channel, the STA gives access to an appropriate STA in turn, according to some embodiments. More specifically, Figure 19 illustrates a TXOP sharing group including STAs 1-4 (and possibly additional STAs) which are contending for channel access every "x" seconds according to a configured cadence. Furthermore, STA 3 can win the TXOP (e.g., be the first STA to gain access to the channel) and transmit a CTS to STA 1 (or alternatively to the group address). Accordingly, STA 1 can become the TXOP beneficiary and therefore can access and utilize the channel to transmit, during the protected TXOP sharing duration), P2P communications to other STAs in the coordinating group or UL data/traffic to an AP.

Additionally, after another round of contention, STA 1 can first gain access to the channel (e.g., win the TXOP) and transmit a CTS to STA 2 (or alternatively to the group address). Accordingly, STA 2 can become the new TXOP beneficiary and transmit P2P communications to other STAs or UL data traffic to an AP. Similarly, after yet another round of contention to access the channel, STA 4 can first gain access to the channel and subsequently transmit a CTS to STA 3 2 (or alternatively to the group address). Accordingly, STA 3 can become the TXOP beneficiary and proceed to transmit P2P communications to other STAs in the coordinating group or UL data traffic to an AP, according to some embodiments.

In other words, Figure 18 describes an example embodiment of STA coordinated channel access in which the STAs can be configured to make particular STAs the TXOP beneficiaries. Furthermore, the particular STAs can be made TXOP beneficiaries in a particular order, according to some embodiments. In other words, when one of the STAs in the coordinating group accesses the channel it gives access to the STA who's turn it is to be the TXOP beneficiary. According to some embodiments, the order of accessing the channel can be determined or indicated to the STAs (e.g., the STAs in the coordination group) at a configuration phase. Accordingly, the TXOP winner can send a frame (e.g., CTS) to reserve the channel and allow the TXOP beneficiary to use the channel in turn. In some embodiments, the CTS frame can be addressed to the TXOP winner or have the destination address to the coordinating group address. Additionally or alternatively, if the group address is used for the CTS destination, it can be preconfigured during the group formation to indicate which STA is to use the channel among the group members (upon receiving the CTS to group address frame). Accordingly, whichever STA is indicated to be the TXOP beneficiary, it can start transmitting data after receiving the CTS.

In some embodiments, if a STA did not get served with a TXOP due to channel blocking or congestion, the STA can lose its turn and the original order for sharing can continue. Accordingly, the STA can contend separately outside the regular schedule, according to some embodiments. In other words, if a STA is indicated to be the next TXOP beneficiary but is unable to utilize the TXOP due to channel blocking or congestion (among various other reasons), that particular STA can be skipped and the TXOP winner STA can transmit a CTS to the next indicated TXOP beneficiary in the configured sequence, according to some embodiments.

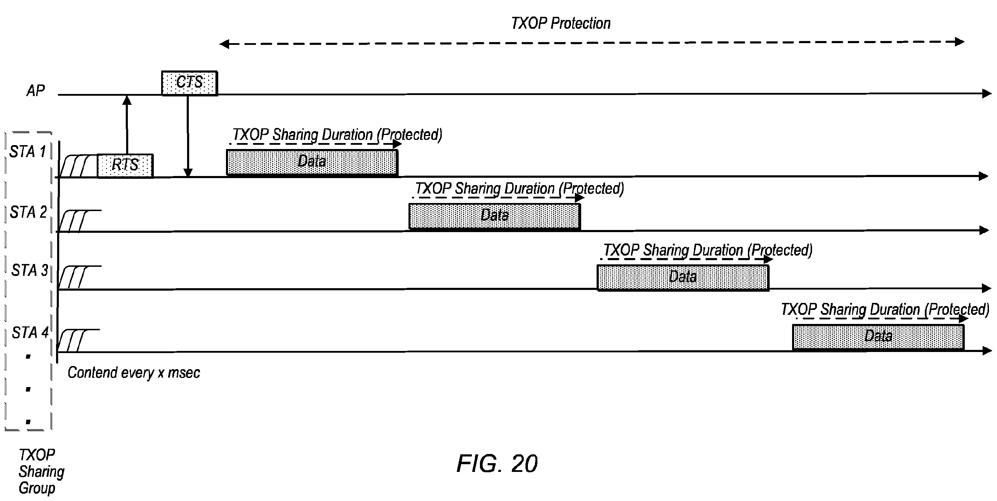

Figure 20 illustrates an example scenario of TXOP sharing which utilizes coordination with an AP, according to some embodiments. More specifically, Figure 19 illustrates a scenario in which when one of the STAs in a coordinating group accesses the channel, the TXOP winner STA sends an RTS to an AP in order to facilitate data transmissions from STAs in the TXOP sharing group in pre-configured (or agreed upon) portions of a TXOP, according to some embodiments.

For example, Figure 20 illustrates STAs in the coordinating group contending for channel access and STA 1 gaining channel access with the AP. Accordingly, once STA 1 has gained channel access, it can send an RTS with a Group address ID to the AP. Furthermore, the AP can send a CTS as a response to the RTS such that STA 1 can proceed with transmitting UL data or traffic to the AP during its pre-configured time duration or portion (e.g., a TXOP sharing duration). Accordingly, the group addresses of the RTS/CTS can allow the STAs in the TXOP sharing group to recognize or determine that the TXOP is shared among said STAs in the TXOP sharing group. In other words, if the RTS and/or CTS are sent with a destination address equal to the group address of the TXOP sharing group (e.g., the RTS and CTS are sent by group address), the STAs in this group can be expected to share the TXOP and the STAs in the group can recognize or determine the TXOP to be shared. Furthermore, the order of access can be predefined, according to some embodiments. According to some embodiments, the STAs in the TXOP sharing group can be expected to be awake during the expected TXOP sharing time. However, a STA can be permitted to go to sleep after it is done with its sharing portion.

Accordingly, once STA 1 has received the CTS from the AP, STA 1 can use the portion of the TXOP agreed on in the coordination setup and can further stop transmitting (after completing its UL transmissions to the AP) to allow the other STAs in the TXOP sharing group to use the remainder of the TXOP (e.g., other pre-configured portions / TXOP sharing durations of the TXOP). In some embodiments, the TXOP sharing portion can be fully used by all STAs such that each STA in the TXOP sharing group uses a pre-agreed upon portion of the TXOP and finishes transmitting its data before the next scheduled sharing portion. While Figure 20 illustrates the portions of the TXOP including UL data traffic to the AP, said portions of the TXOP assigned to each STA can alternatively be used for P2P data, DL data if the STA is an AP or mobile AP, UL data transmission to AP/mobile AP, or AP transmission to AP/mobile AP, according to some embodiments.

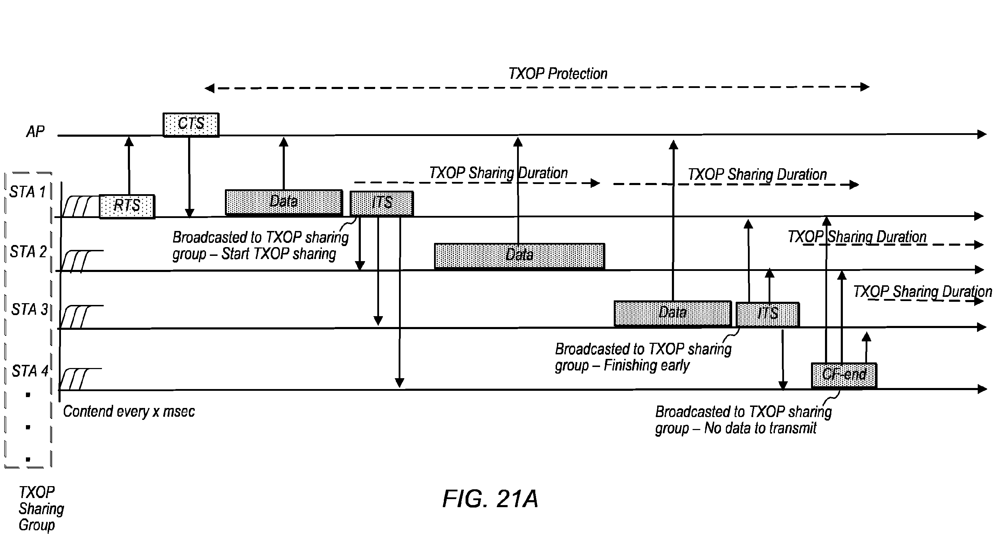

Figures 21A-B illustrate examples of early termination of sharing portions through explicit signaling or via channel monitoring, according to some embodiments. For example, Figure 21A illustrates an example scenario of early termination of a sharing portion through use of explicit signaling, according to some embodiments. More specifically, Figure 21A illustrates a situation in which if a STA finishes early transmission before the end of its assigned period or does not have data to transmit, it can transmit an invitation to send (ITS) to the next member or to the group address. In some embodiments, the ITS can be a simple CTS frame with a destination equal to the next STA in turn (e.g., the next STA according to a sequence or schedule indicating in configuration information). In other words, the next sharing STA can start transmitting its data when triggered by other group member STAs or when it is its scheduled time to transmit, according to some embodiments. Additionally or alternatively, if a STA receives an early ITS frame, it can possibly extend its time of data transmission until the boundary of its originally allocated resources. Moreover, the last STA in the TXOP sharing group can possibly terminate the TXOP early if no further data is to be shared, according to some embodiments. Additionally, the portions of the TXOP assigned to each STA can be used for P2P data, DL data if the STA is AP or mobile AP, or UL data transmission to AP/mobile AP, according to some embodiments.

For example, Figure 21A illustrates STA 1 transmitting an RTS to an AP after gaining access to the channel and subsequently receiving a CTS from the AP. Accordingly, STA 1 can proceed to transmit UL data to the AP followed by an ITS broadcast to the TXOP sharing group. Accordingly, STA 2 can then, having received the ITS from STA 1, proceed to transmit its uplink data in the remaining TXOP sharing duration of STA 1's portion of the TXOP (e.g., the first TXOP sharing duration). Furthermore, at the end of the first TXOP sharing duration, STA 3 can proceed to transmit its UL data to the AP and, if it finishes its transmission early, proceed to transmit an ITS to the TXOP sharing group. Accordingly, having received the ITS from STA 3, STA 4 can proceed to transmit during another TXOP sharing duration or, if STA 4 has no data to transmit, it can transmit a message to the TXOP sharing group including a CF-end parameter such that the sharing portion is terminated early, according to some embodiments.

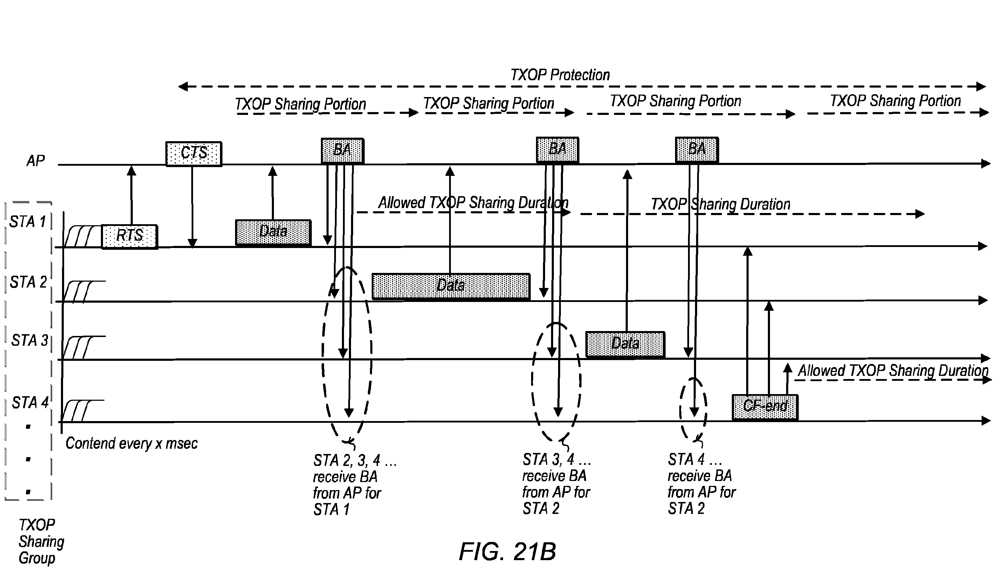

Alternatively, Figure 21B illustrates an example scenario of early termination of sharing portions through channel monitoring, according to some embodiments. For example, a STA can possibly monitor transmitted packets in order to decide or determine if it is its turn to transmit before its scheduled time. In some instances, UL packets can be followed by DL acknowledgement (ACK) messages such as BA. Accordingly, if STAs in the TXOP sharing group were to monitor and potentially receive BAs from an AP, the STAs can possibly determine that data transmitted by another STA was successfully delivered to the AP. Alternatively, STAs in the TXOP sharing group can possibly decode a medium access control (MAC) header of the previous sharing STA's physical protocol data units (PPDUs) to determine that data transmitted by another STA was successfully delivered to the AP, according to some embodiments. Additionally, the portion of the TXOP assigned to each STA can be used for P2P data, DL data if the STA is AP / mobile AP, or UL data transmission to AP/mobile AP, according to some embodiments.

For example, Figure 21B illustrates STA 1 transmitting an RTS to an AP after gaining access to the channel and subsequently receiving a CTS from the AP. Accordingly, STA 1 can proceed to transmit UL data to the AP and BAs from the AP can be sent to the TXOP sharing group. Accordingly, STA 2 can then, having received the BA from the AP, proceed to transmit its UL data in an allowed TXOP sharing portion of the TXOP which can include part of the first TXOP sharing portion and part of a second TXOP sharing portion. Furthermore, once STA 2 has completed its UL data transmission to the AP, the AP can once again transmit BAs to the TXOP sharing group. Accordingly, STA 3 can proceed to transmit its UL data to the AP. Once again, the AP can transmit BAs to the TXOP sharing group in response to the UL transmission from STA 3. Accordingly, having received the BA from the AP, STA 4 can proceed to transmit UL data to the AP during an allowed TXOP sharing portion or, as shown in Figure 21B, if STA 4 has no data to transmit, it can transmit a message to the TXOP sharing group including a CF-end parameter such that the sharing portion is terminated early, according to some embodiments.

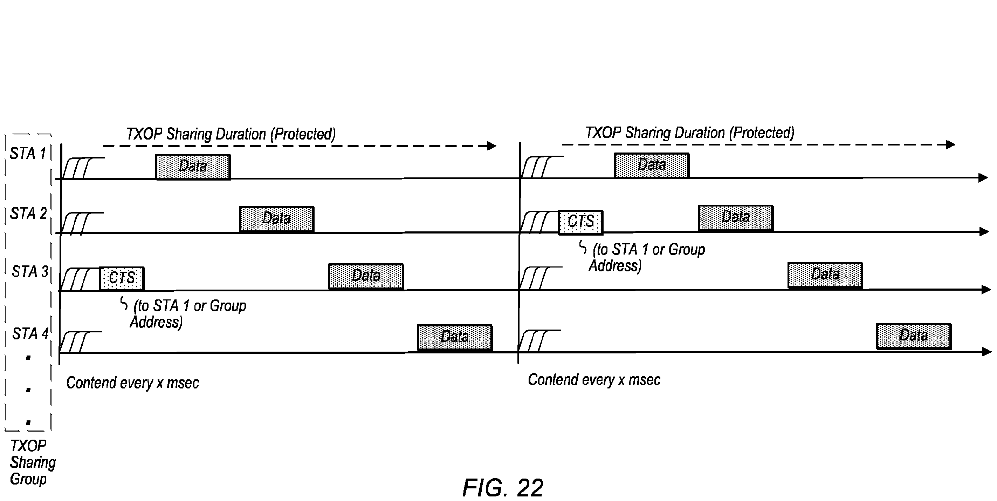

Figure 22 illustrates another variation of TXOP sharing between STAs of a TXOP sharing group, according to some embodiments. In some instances, the order of accessing the channel can determine how many resources each STA can have. For example, STAs at the end of the TXOP can gain (or have access to) more or additional resources of the TXOP if any of the STAs did not use some or all of its resources for its protected TXOP sharing duration. Furthermore, STAs at the beginning of the TXOP can possibly go to sleep earlier and therefore can possibly not need to monitor the channel during the whole TXOP until they receive their resource assignments, according to some embodiments. Accordingly, in order to create a balanced transmitting schedule that doesn't result in STAs getting access to the channel more often than orders, the order of accessing the channel can be adjusted such that resources gain and power loss trade-offs are taken into account.

For example, if there are requirements for a STA to favor TXOP resources over power consumption, it can be possible to adjust the order of channel access by assigning these STAs to the end of the TXOP sharing schedule. In other words, since some STAs can need or prioritize available resources, they can possibly benefit from the likelihood of additional resources available near the end of a TXOP due to previous STAs finishing transmitting early. Alternatively, if there are requirements for a STA to favor or prioritize power conservation over additional TXOP resources, it can be beneficial to adjust the order (e.g., sequence) of channel access such that these STAs are assigned to the beginning of the TXOP. In other words, since these STAs can need additional power conservation, it can be beneficial for them to access the channel early (or first) in the TXOP such that they can go to sleep (e.g., conserve power) after transmitting.

For example, Figure 22 illustrates a TXOP sharing group contending for channel access every "x" seconds according to a configured cadence. Additionally, Figure 22 illustrates a scenario in which STA 3 is the first to gain access to the channel and subsequently transmits a CTS to STA 1 (or the group address). Accordingly, it can be that STA 3 makes STA 1 (according to an adjusted order or sequence of channel access) the TXOP beneficiary due to its need or prioritization of power conservation over TXOP resources. Similarly, Figure 22 illustrates that STA 4 can be placed at the end of an adjusted order or sequence of channel access due to its prioritization of TXOP resources over power conservation, according to some embodiments. For example, if any of STAs 1-3 are able to terminate their transmissions early, STA 4 can benefit from the additional resources of the protected TXOP sharing duration by being at the end of the order or sequence of channel access, according to some embodiments. As another alternative, the STAs can be configured such that the assignment of resources is static, according to some embodiments. In other words, each STA accessing the medium can be allocated the same number of resources such that the protected TXOP sharing duration portions for each STA is the same. Furthermore, the assigned resources can be used for P2P, UL, or DL traffic, according to some embodiments. In other words, the data blocks can be P2P, UL, or DL traffic, according to some embodiments.

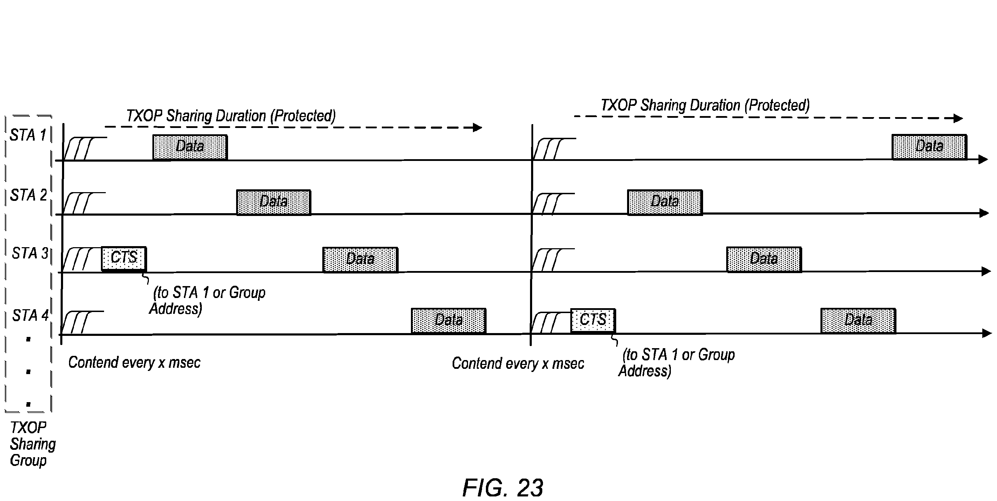

Figure 23 illustrates an additional variation of TXOP sharing between STAs of a TXOP sharing group, according to some embodiments. In some instances, it can be beneficial to make the power and resource distribution balanced among STAs in a TXOP sharing group. Accordingly, the order of scheduled channel access can be adjusted such that it rotates based on time of access. For example, Figure 23 illustrates an example scenario in which a first order of channel access is implemented by the TXOP winner (e.g., STA 3) such that the order of channel access is given first to STA 1 as the TXOP beneficiary and then subsequently to STA 2, STA 3, and finally STA 4. However, after a next round of contention for access, STA 4 can gain first access to the channel and accordingly proceed to make STA 2 the TXOP beneficiary such that it can transmit data first. Accordingly, STA 3, STA 4, and STA 1 would then respectively possibly be able to transmit during the TXOP sharing duration. In other words, the order or sequence of channel access can be adjusted such that the beneficiaries of the TXOP are equally distributed in order to provide each STA in the TXOP sharing group with an opportunity to be the TXOP beneficiary (e.g., first to transmit in the TXOP sharing duration), according to some embodiments. Additionally or alternatively, if for one access period the channel was blocked or congested, this order or sequence can be passed or skipped in order to avoid synchronization issues. Furthermore, the assigned resources can be used for P2P, UL, or DL traffic, according to some embodiments. In other words, the data blocks can be P2P, UL, or DL traffic, according to some embodiments.

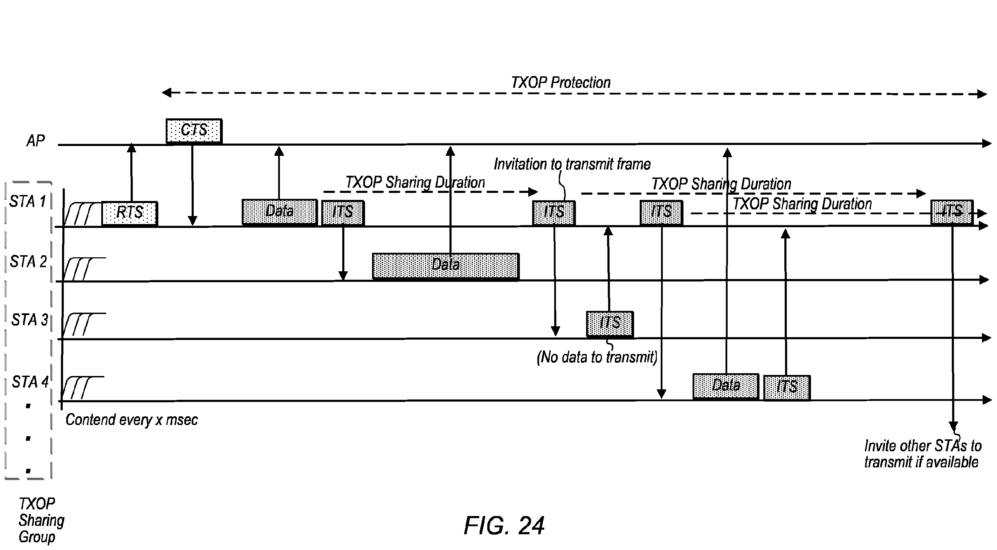

Figure 24 illustrates an additional example scenario of TXOP sharing between STAs of a TXOP sharing group, according to some embodiments. More specifically, Figure 24 illustrates a scenario in which TXOP sharing is coordinated by the TXOP winner (e.g., the first to access the channel). For example, Figure 24 illustrates a TXOP sharing group including STA 1 which is the first to gain access to the channel. Accordingly, STA 1 (as the TXOP holder) can transmit an RTS to an AP and subsequently received an CTS from said AP. STA 1 can then proceed to transmit UL data to the AP and then, having transmitted all of its data prior to the end of the TXOP sharing duration, transmit an ITS to the next user in the schedule (e.g., next STA in the order or sequence). In other words, the TXOP holder (e.g., STA 1 in this example) can send an ITS frame to the next STA of the TXOP sharing group according to the order or sequence of channel access. Accordingly, after STA 2 has transmitted its UL data to the AP, STA 1 can send another ITS to the next STA in the TXOP sharing group (e.g., STA 3). Accordingly, STA 3, which can possibly not have any data to transmit can transmit an ITS to the TXOP holder (e.g., STA 1) to indicate said lack of data to transmit. Accordingly, STA 1 can transmit another ITS to STA 4 (as the next STA in the order of channel access) and STA 4 can accordingly transmit its UL data to the AP. Furthermore, if STA 4 finished transmitting its UL data before the TXOP sharing duration had elapsed, it can additionally send an ITS to the TXOP holder STA 1, according to some embodiments. In other words, Figure 24 illustrates a mechanism in which the TXOP holder sends an ITS to the next user (e.g., STA) in the schedule. Accordingly, STA group members transmit their data when it's time to transmit or when it is triggered early by the TXOP holder. Furthermore, the ITS frame can alternatively be a CTS frame directed to the coordinator (e.g., STA 1) or a new defined frame.

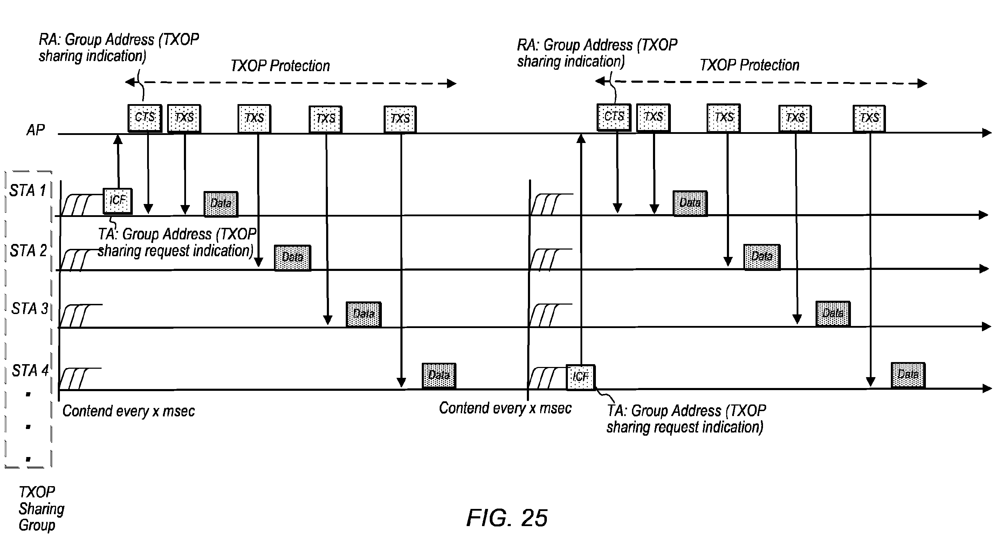

### Figures 25-28 - Example Aspects of AP Coordinated Channel Access

Figures 25-28 illustrate example aspects of AP coordinated channel access for TXOP sharing groups, according to some embodiments. Additionally, the method of Figure 14 can further correspond to the examples shown in Figures 25-28, according to some embodiments.

For example, Figure 25 illustrates a scenario in which a TXOP sharing group has been formed and allocation of resources have already been setup for the TXOP group (e.g., according to a configuration). Accordingly, the STAs in the TXOP sharing group (e.g., STAs 1-3 as well as additional STAs) can be associated with a group ID, according to some embodiments. More specifically, Figure 25 illustrates STA 1 first gaining access to the channel as the TXOP winner and subsequently sending an initial control frame (ICF) to the AP from the group address. Accordingly, the AP can determine, based at least in part on receiving a frame with group address, that the TXOP is a shared TXOP. Therefore, the AP can respond to STA 1 with a CTS and take control of the TXOP, according to some embodiments. Moreover, the AP can proceed to send triggered TXOP sharing (TXS) frames to the STAs in the TXOP sharing group in the order or sequence as pre-configured, according to some embodiments. Furthermore, if one of the STAs finishes transmitting before the assigned time (e.g., the TXOP sharing duration), the AP can possibly grab or take control of the medium (e.g., channel) with a point coordination function (PCF) interframe space (PIFS) recovery procedure, according to some embodiments. Furthermore, data transmitted by the STAs during the shared TXOP can be UL data traffic or P2P traffic, according to some embodiments.

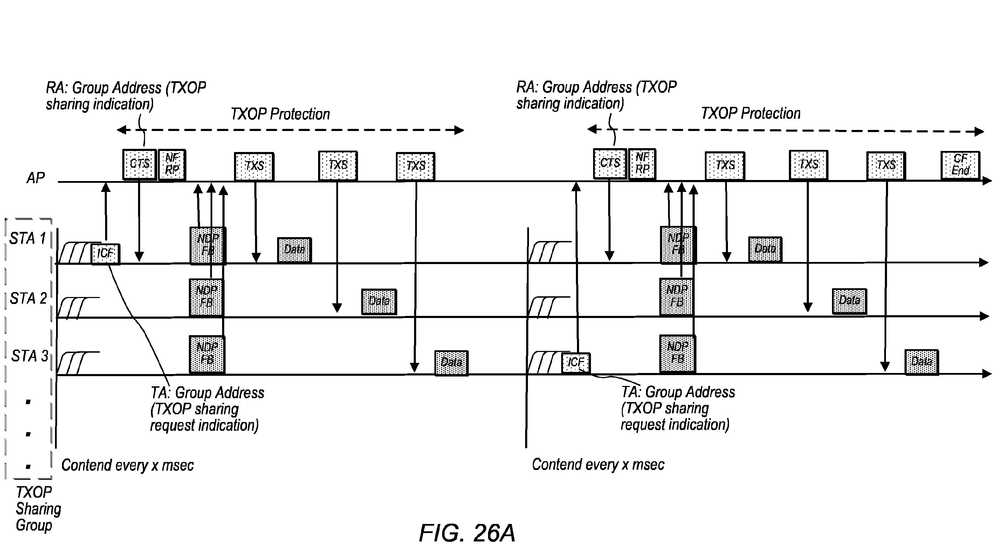

Figures 26A-B illustrates example scenarios of AP coordinated channel access for TXOP sharing groups, according to some embodiments. More specifically, Figure 26A illustrates a mechanism for an AP to receive feedback from STAs in a TXOP sharing group if they have traffic to send. For example, Figure 26A illustrates STA 1 first gaining access to the channel as the TXOP winner and subsequently sending an ICF to the AP using a transmitter address (TA) as the group address. Accordingly, the AP can determine, based at least in part on receiving a frame with group address, that the TXOP is a shared TXOP. Therefore, the AP can respond to STA 1 with a CTS using the receiver address (RA) which is the group address of the TXOP sharing group and subsequently take control of the TXOP, according to some embodiments. Additionally the AP can, as part of or in addition to the CTS, transmit a null data packet (NDP) feedback report poll (NFRP) to the STAs of the TXOP sharing group (e.g., STA 1-3, etc.), according to some embodiments. Accordingly, STAs 1-3 (as well as any additional STAs in the TXOP sharing group) can proceed to transmit NDP feedback (FB) to the AP. Having received the NDP FB, the AP can then transmit TXS frames to the STAs which indicated, via the NDP FB, that they had data to transmit, according to some embodiments. Accordingly, the STAs can respectively transmit data (e.g., P2P or UL data traffic) in response to respectively receiving the TXS frames from the AP. In other words, the AP can possibly get feedback from sharing group STAs to determine if they have traffic to send. The AP can accomplish this by sending NFRP trigger frames (TFs) to sharing group STAs and receiving NDP feedback reports to indicate if they have traffic. If the STAs respond positively (e.g., indicating that they do have data to transmit), the AP can schedule TXS for these STAs. Alternatively, if the AP receives feedback that there is no traffic for one of the STAs, it can terminate the TXOP early for that STA, according to some embodiments.

Furthermore, after another round of contention for channel access, STA 3 can be the first STA to gain access to the channel as the TXOP winner and therefore STA 3 can subsequently send an ICF to the AP using a TA as the group address. Accordingly, the AP can determine, based at least in part on receiving a frame with group address, that the TXOP is a shared TXOP. Therefore, the AP can respond to STA 3 with a CTS using the RA which is the group address of the TXOP sharing group and subsequently take control of the TXOP, according to some embodiments. Additionally the AP can, as part of or in addition to the CTS, transmit a NFRP to the STAs of the TXOP sharing group (e.g., STA 1-3, etc.), according to some embodiments. Accordingly, STAs 1-3 (as well as any additional STAs in the TXOP sharing group) can proceed to transmit NDP FB to the AP.

Having received the NDP FB, the AP can then transmit TXS frames to the STAs in the TXOP sharing group that indicated via the NDP FB that they had data to send (e.g., STAs 1 and 3), according to some embodiments. Accordingly, the STAs can respectively transmit data (e.g., P2P or UL data traffic) in response to respectively receiving the TXS frames from the AP. Furthermore, having determined that STA 2 did not have data to transmit (e.g., as indicated in NDP FB), the AP can transmit a CTS including a CF-end value in order to terminate the TXOP sharing duration early, according to some embodiments.

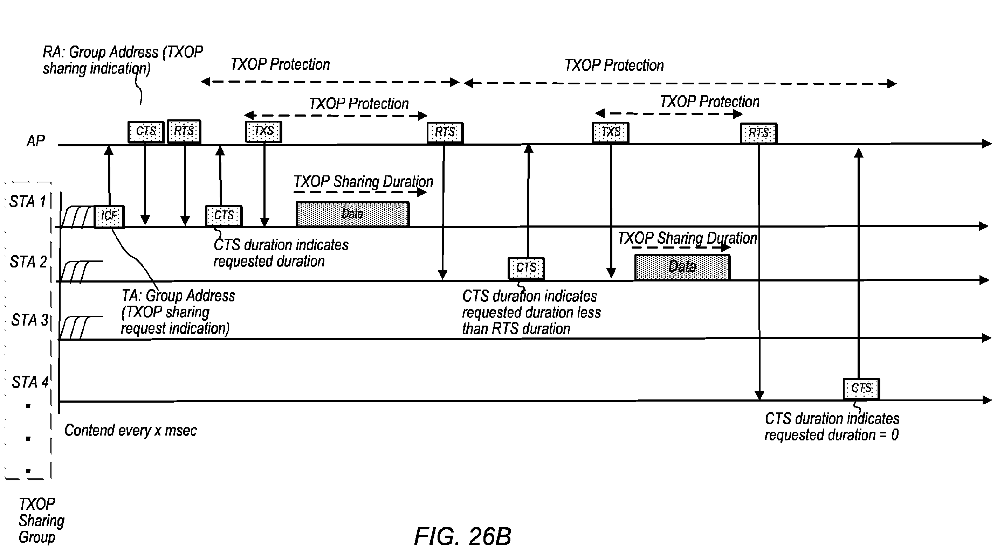

Figure 26B illustrates an additional example scenario for AP coordinated channel access for TXOP sharing groups of STAs, according to some embodiments. For example, it can be possible for the AP to attain more information about the duration needed for the TXS to be sent to the STAs in a TXOP sharing group. More specifically, Figure 26B illustrates STA 1 first gaining access to the channel as the TXOP winner and subsequently sending an ICF to the AP using a transmitter address (TA) as the group address. Accordingly, the AP can determine, based at least in part on receiving a frame with group address, that the TXOP is a shared TXOP. Therefore, the AP can respond to STA 1 with a CTS using the receiver address (RA) which is the group address of the TXOP sharing group and subsequently take control of the TXOP, according to some embodiments. Additionally the AP can, as part of or in addition to the CTS, transmit a RTS message to STA 1 of the TXOP sharing group (e.g., STA 1-4, etc.), according to some embodiments. In some embodiments, the duration of RTS can be the maximum allowed sharing duration for the TXOP sharing group STAs. Accordingly, STA 1 can proceed to transmit a CTS to the AP in which the duration of the CTS can represent the requested duration (wherein the CTS duration is less than or equal to the RTS duration), according to some embodiments.

Having received the CTS with the requested duration, the AP can then transmit TXS frames to the STAs which indicated, via respective CTS frames, requested durations for TXOP transmissions, according to some embodiments. Accordingly, the STAs can respectively transmit data (e.g., P2P or UL data traffic) in response to respectively receiving the TXS frames from the AP. In other words, if the STAs respond positively (e.g., indicating a specified duration for data to transmit), the AP can schedule TXS for these STAs and they can proceed with their transmissions. Alternatively, if the AP receives feedback that there is no traffic for one of the STAs (e.g., if the requested duration in a CTS is zero), it can terminate the TXOP early for that STA, according to some embodiments. In other words, by sending an RTS before each STA data transmission in order to determine the requested duration for each STA's transmission, this can allow the AP to provide a more flexible and efficient coordination of the TXOP sharing group and its data transmissions.

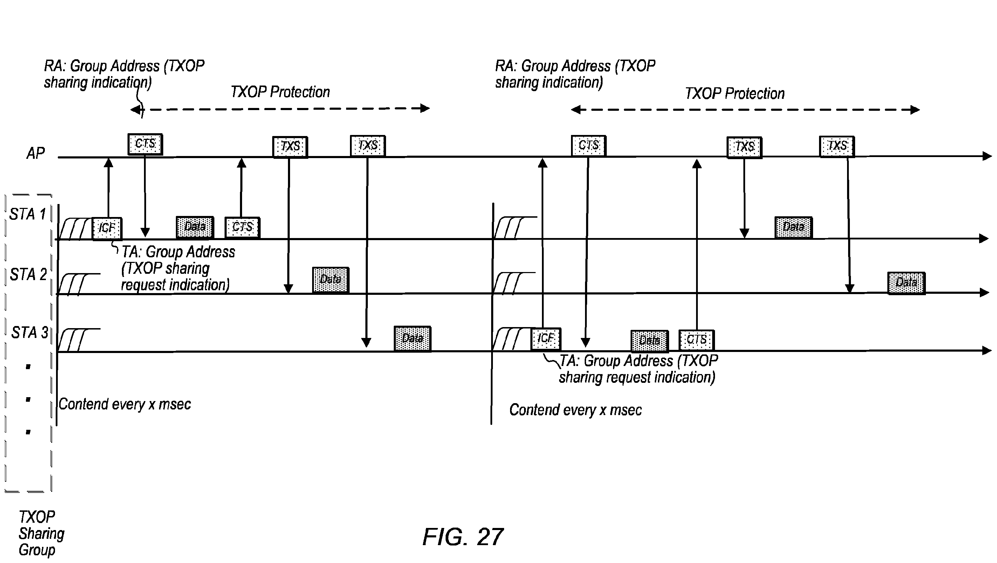

Figure 27 illustrates another example scenario for AP coordinated channel access for TXOP sharing groups of STAs, according to some embodiments. More specifically, Figure 27 illustrates STA 1 being the first STA in the TXOP sharing group to access the channel and subsequently send an ICF to the AP using a TA as the group address. Accordingly, the AP can determine, based at least in part on receiving a frame with group address, that the TXOP is a shared TXOP. Therefore, the AP can respond to STA 1 with a CTS using the RA which is the group address of the TXOP sharing group and subsequently take control of the TXOP, according to some embodiments.

STA 1 can then proceed to send its UL data to the AP without further need to wait for AP scheduling, according to some embodiments. Additionally, once the STA has completed its intended UL data transmission, it can send a CTS frame (or ICF frame) to the AP to indicate that it is willing to share the rest of the TXOP with the AP. In some embodiments, the CTS or ICF can be sent using the group address as a TA and the receiver (e.g., the AP) can use the group address as a RA, according to some embodiments. Once again, upon receiving a frame with the group address, this can be an indication that this TXOP is a shared TXOP and the AP can once again take control of the TXOP. The AP can then proceed to send TXS frames to the STAs in the TXOP sharing group as pre-configured. Additionally, if one of the STAs finished before the assigned time, the AP can possibly take control of the channel with a PIFS recovery, according to some embodiments.

As previously discussed, TXOP sharing group formation and resources allocation can be setup before any of the STAs attempt to gain access to a channel. For example, STAs in the TXOP sharing group form a group with a group ID, according to some embodiments. Additionally, data transmitted during the shared resources can be UL data or P2P traffic, according to some embodiments.

Additionally, the data boxes in any of the previous figures can be represented as one or more PPDUs and their BA responses, according to some embodiments. Furthermore, at least in some instances, the transmitted and received data or frames (e.g., RTS, CTS, P2P, BA, among others) of any of the previous figures can generally not overlap in time. For example, while not explicitly shown in at least some of the figures, there can be at least one short interframe space (SIF) between said frames, according to some embodiments. Moreover, while not explicitly shown in at least some of the figures, backoff counters can start or be preceded by the start of a contention period, according to some embodiments. For example, before a backoff counter is initiated, this can correspond to the start of a contention period to gain access to the channel, according to some embodiments.

It is well understood that the use of personally identifiable information should follow privacy policies and practices that are generally recognized as meeting or exceeding industry or governmental requirements for maintaining the privacy of users. In particular, personally identifiable information data should be managed and handled so as to minimize risks of unintentional or unauthorized access or use, and the nature of authorized use should be clearly indicated to users.

In some embodiments, a first non-access point (non-AP) station of a group of at least two non-AP stations can receive, from a second non-AP station of the group of at least two non-AP stations, signaling comprising information corresponding to a transmission opportunity (TXOP). Additionally, the first non-AP can transmit, in accordance with the information corresponding to the TXOP and scheduling information associated with the group of at least two non-AP stations, first data to one or more devices, wherein the first data is transmitted to the one or more devices in at least a portion of the TXOP.

According to some embodiments, the signaling comprising information corresponding to the TXOP can indicate for only the first non-AP station to transmit the first data using at least a portion of the TXOP. Furthermore, when the first non-AP station completes transmission of the first data prior to an end of the TXOP, the method can further comprise transmitting, to a group address of associated with the group of at least two non-AP stations, a control frame to terminate the TXOP, the control frame message comprising one or more parameters, according to some embodiments.

According to further embodiments, the method can further comprise transmitting, to the at least two non-AP stations, one or more multiple user block acknowledgement requests (MU-BAR) and receiving, from the at least two non-AP stations, one or more block acknowledgements (BAs). Additionally or alternatively, the signaling comprising information corresponding to the TXOP can indicate for the first non-AP station and one or more additional non-AP stations of the group of at least two non-AP stations to respectively transmit data to the one or more devices using at least a portion of the TXOP. Furthermore, when one of the at least two non-AP stations completes a respective transmission of data prior to an end of the TXOP, the method can further comprise receiving, based on a group address associated with the group of at least two non-AP stations, a control frame to terminate the TXOP, the control frame comprising one or more parameters, according to some embodiments.

In some embodiments, the group of at least two non-AP stations can be associated with a group address or group identifier (ID). Additionally or alternatively, the first data can be transmitted to one or more devices including at least one of one or more APs, one or more mobile APs, one or more non-APs, or one or more non-AP stations (STAs). According to some embodiments, the signaling comprising information corresponding to a transmission opportunity (TXOP) can further comprise a control frame including an address of the group of at least two non-AP stations. In some embodiments, the method can be performed after one or more contention periods have elapsed.

According to some embodiments, a processor can comprise memory storing instructions that, when executed, cause a first non-access point (non-AP) to establish, via an access channel, a wireless link with an access point (AP). Additionally, the instructions can be further executable to cause the first non-AP station to transmit, to the AP, a request corresponding to a transmission opportunity (TXOP) and comprising an address of the first non-AP station. Furthermore, the instructions can be further executable to cause the first non-AP station to receive a response from the AP and transmit, in accordance with scheduling information associated with the first non-AP station, first data in at least a portion of the TXOP.

In some embodiments, when the first non-AP station completes transmission of the first data prior to an end of the TXOP, the instructions can be further executable to cause the first non-AP station to broadcast, to a group address of a group of at least two non-AP stations, one or more control frames to invite the at least two non-AP stations to transmit. Furthermore, the request can include an indication for only one of the at least two non-AP stations to transmit data using at least a portion of the TXOP. Additionally or alternatively, the instructions can be further executable to cause the first non-AP station to receive, from one or more of the at least two non-AP stations, one or more invitation to transmit (ITS) messages. In some embodiments, the one or more ITS messages can indicate to the first non-AP station that a non-AP station has no data to transmit or that a non-AP station has completed transmission of data prior to an end of a portion of the TXOP.

According to further embodiments, an access point (AP) can comprise a radio and a processor operably coupled to the radio. Furthermore, the processor can be configured to cause the AP to establish, via an access channel, a wireless link with a first non-access point (non-AP) station in a group of at least two non-APs. Additionally, the processor can configured to cause the AP to receive, from the first non-AP station, signaling comprising at least one of an address of the group of at least two non-APs or a single non-AP station and a transmission opportunity (TXOP) sharing request indication. Furthermore, the processor can be configured to cause the AP to transmit, to the first non-AP station, a response comprising a TXOP sharing indication and transmit, to additional non-AP stations in the group of at least two non-AP stations, additional responses respectively comprising TXOP sharing indications.

In some embodiments, the processor can be further configured to cause the AP to transmit, to one or more non-AP stations of the group of at least two non-AP stations, one or more null data packet feedback report polls (NFRPs). Additionally, the processor can be further configured to cause the AP to transmit, to one or more non-AP stations of the group of at least two non-AP stations, one or more request to send (RTS) messages. Additionally or alternatively, the durations of the RTS messages can be maximum allowed sharing durations, according to some embodiments. In some embodiments, the processor can be further configured to cause the AP to receive, from one or more non-AP stations of the group of at least two non-AP stations, one or more control frames. Additionally, the durations of the control frames can indicate requested durations less than or equal to the maximum allowed sharing durations, according to some embodiments. Furthermore, the processor can be further configured to cause the AP to perform, in response to one or more non-AP stations of the group of at least two non-AP stations completing a transmission before an assigned time, a point coordination function interframe space (PIFS) recovery of the access channel.

Embodiments of the present disclosure can be realized in any of various forms. For example, some embodiments can be realized as a computer-implemented method, a computer-readable memory medium, or a computer system. Other embodiments can be realized using one or more custom-designed hardware devices such as ASICs. Other embodiments can be realized using one or more programmable hardware elements such as FPGAs.

In some embodiments, a non-transitory computer-readable memory medium can be configured so that it stores program instructions and/or data, where the program instructions, if executed by a computer system, cause the computer system to perform a method, e.g., any of the method embodiments described herein, or, any combination of the method embodiments described herein, or, any subset of any of the method embodiments described herein, or, any combination of such subsets.

In some embodiments, a wireless device can be configured to include a processor (and/or a set of processors) and a memory medium, where the memory medium stores program instructions, where the processor is configured to read and execute the program instructions from the memory medium, where the program instructions are executable to cause the wireless device to implement any of the various method embodiments described herein (or, any combination of the method embodiments described herein, or, any subset of any of the method embodiments described herein, or, any combination of such subsets). The device can be realized in any of various forms.

Although the embodiments above have been described in considerable detail, numerous variations and modifications will become apparent to those skilled in the art once the above disclosure is fully appreciated. It is intended that the following claims be interpreted to embrace all such variations and modifications.

## Claims

1. A method, comprising:
at a first non-access point (non-AP) station of a group of at least two non-AP stations:
receiving, from a second non-AP station of the group of at least two non-AP stations, signaling comprising information corresponding to a transmission opportunity (TXOP); and
transmitting, in accordance with the information corresponding to the TXOP and scheduling information associated with the group of at least two non-AP stations, first data to one or more devices, wherein the first data is transmitted to the one or more devices in at least a portion of the TXOP.

2. The method of claim 1, wherein the signaling comprising information corresponding to the TXOP indicates for only the first non-AP station to transmit the first data using at least a portion of the TXOP.

3. The method of claim 2, wherein, when the first non-AP station completes transmission of the first data prior to an end of the TXOP, the method further comprises:
transmitting, to a group address associated with the group of at least two non-AP stations, a control frame to terminate the TXOP, the control frame comprising one or more parameters.

4. The method of claim 2, wherein the method further comprises:
transmitting, to the at least two non-AP stations, one or more multiple user block acknowledgement requests (MU-BAR); and
receiving, from the at least two non-AP stations, one or more block acknowledgements (BAs).

5. The method of claim 1, wherein the signaling comprising information corresponding to the TXOP indicates for the first non-AP station and one or more additional non-AP stations of the group of at least two non-AP stations to respectively transmit data to the one or more devices using at least a portion of the TXOP.

6. The method of claim 5, wherein, when one of the at least two non-AP stations completes a respective transmission of data prior to an end of the TXOP, the method further comprises:
receiving, based on a group address associated with the group of at least two non-AP stations, a control frame to terminate the TXOP, the control comprising one or more parameters.

7. The method of claim 1, wherein the group of at least two non-AP stations is associated with a group address or group identifier (ID).

8. The method of claim 1, wherein the first data is transmitted to one or more devices including at least one of:
one or more APs;
one or more mobile APs;
one or more non-APs; or
one or more non-AP stations (STAs).

9. The method of claim 1, wherein the signaling comprising information corresponding to a transmission opportunity (TXOP) comprises a control frame including an address of the group of at least two non-AP stations.

10. The method of claim 1, wherein the method is performed after one or more contention periods have elapsed.

11. A processor, comprising:
memory storing instructions that, when executed, cause a first non-access point (non-AP) station to:
establish, via an access channel, a wireless link with an access point (AP);
transmit, to the AP, a request corresponding to a transmission opportunity (TXOP) and comprising an address of the first non-AP station;
receive a response from the AP; and
transmit, in accordance with scheduling information associated with the first non-AP station, first data in at least a portion of the TXOP.

12. The processor of claim 11, wherein, when the first non-AP station completes transmission of the first data prior to an end of the TXOP, the instructions are further executable to cause the first non-AP station to:
broadcast, to a group address of a group of at least two non-AP stations, one or more control frames to invite the at least two non-AP stations to transmit.

13. The processor of claim 11, wherein the request includes an indication for only one of the at least two non-AP stations to transmit data using at least a portion of the TXOP.

14. An access point (AP), comprising:
a radio; and
a processor operably coupled to the radio and configured to cause the AP to:
establish, via an access channel, a wireless link with a first non-access point (non-AP) station in a group of at least two non-APs;
receive, from the first non-AP station, signaling comprising at least one of an address of the group of at least two non-APs or an address of a single non-AP station and a transmission opportunity (TXOP) sharing request indication;
transmit, to the first non-AP station, a response comprising a TXOP sharing indication; and
transmit, to additional non-AP stations in the group of at least two non-AP stations, additional responses respectively comprising TXOP sharing indications.

15. The AP of claim 14, wherein the processor is further configured to cause the AP to:
transmit, to one or more non-AP stations of the group of at least two non-AP stations, one or more null data packet feedback report polls (NFRPs).
